# EUROPÄISCHE PATENTANMELDUNG

(11) **EP 4 793 868 A1**
(43) Veröffentlichungstag der Anmeldung: **19.08.2026**
(21) Anmeldenummer: 25158238.3
(22) Anmeldetag: 17.02.2025
(51) Int. Cl.: G06Q 50/00, G06F 3/01, G09B 5/06, G06Q 30/0251

(54) **AUSTAUSCH VON INFORMATIONEN ZWISCHEN NUTZERN EINER PLATTFORM ÜBER EIN KOMMUNIKATIONSNETZWERK**

(71) Anmelder: Vodafone GmbH, 40549 Düsseldorf (DE)
(72) Erfinder: Köpl, Sebastian, 40549 Düsseldorf (DE)
(74) Vertreter: Weisbrodt, Bernd

(57) **Zusammenfassung**

Die vorliegende Erfindung betrifft ein System bzw. Plattform, insbesondere Soziale Medien Plattform, zum wechselseitigen Austausch von Informationen, insbesondere Medieninhalten (M), zwischen Nutzern (U) des Systems bzw. der Plattform über ein Kommunikationsnetzwerk, insbesondere Internet, insbesondere zum Erstellen, Veröffentlichen, Kommentieren, Annotieren, Weiterleiten und/oder Abonnieren von Informationen, insbesondere Medieninhalten (M), mittels wenigstens eines vom jeweiligen Nutzer (U) dazu eingesetzten Endgerätes (E), insbesondere Smartphone, Tablet, einer sogenannten XR-Brille (XR: Extended Reality) und/oder dergleichen Endgerät (E), wobei die Informationen, insbesondere Medieninhalte (M), zumindest teilweise den Nutzern (U) eine computergestützte Erweiterung der Realitätswahrnehmung mittels wenigstens einem Endgerät (E) ermöglichen, insbesondere eine virtuelle Realität (Virtual Reality (VR)) und/oder eine erweiterte Realität (Augmented Reality (AR)) durch Darstellung von virtuellen, vorzugsweise dreidimensionalen Medieninhalten (M), besonders bevorzugt in Echtzeit, seitens des wenigstens einen Endgerätes (E). Gegenstand der vorliegenden Erfindung ist ferner ein Verfahren zum wechselseitigen Austausch von Informationen, insbesondere Medieninhalten (M), zwischen Nutzern (U) eines System bzw. einer Plattform, insbesondere Soziale Medien Plattform, über ein Kommunikationsnetzwerk. Ein weiterer Gegenstand der vorliegenden Erfindung ist eine Schnittstelle zur Programmierung von Anwendungen (Anwendungsprogrammierschnittstelle (API: Application Programming Interface)) zur Anbindung an und/oder Integration in ein System bzw. eine Plattform, insbesondere Soziale Medien Plattform, zum wechselseitigen Austausch von Informationen, insbesondere Medieninhalten (M), zwischen Nutzern (U) des Systems bzw. der Plattform über ein Kommunikationsnetzwerk.

## Beschreibung

Die vorliegende Erfindung betrifft ein System bzw. eine Plattform, insbesondere Soziale Medien Plattform, zum wechselseitigen Austausch von Informationen, insbesondere Medieninhalten, zwischen Nutzern des Systems bzw. der Plattform über ein Kommunikationsnetzwerk, insbesondere Internet, insbesondere zum Erstellen, Veröffentlichen, Kommentieren, Annotieren, Weiterleiten und/oder Abonnieren von Informationen, insbesondere Medieninhalten, mittels wenigstens eines vom jeweiligen Nutzer dazu eingesetzten Endgerätes, insbesondere Smartphone, Tablet oder dergleichen Endgerät. Gegenstand der vorliegenden Erfindung ist ferner ein Verfahren zum wechselseitigem Austausch von Informationen, insbesondere Medieninhalten, zwischen Nutzern eines System bzw. einer Plattform, insbesondere Soziale Medien Plattform, über ein Kommunikationsnetzwerk, insbesondere Internet. Ein weiterer Gegenstand der Erfindung ist eine Schnittstelle zur Programmierung von Anwendungen (Anwendungsprogrammierschnittstelle (API: Application Programming Interface)) zur Anbindung an und/oder Integration in ein System bzw. eine Plattform, insbesondere Soziale Medien Plattform, zum wechselseitigen Austausch von Informationen, insbesondere Medieninhalten (M), zwischen Nutzern (U) des Systems bzw. der Plattform über ein Kommunikationsnetzwerk.

Derartige Systeme bzw. Plattformen sind im Stand der Technik bekannt, insbesondere als sogenannte Soziale Medien Plattformen (englisch: Social Media Platform), wie beispielsweise Facebook, Instagram, TikTok oder dergleichen, und stellen den Nutzern über ein Kommunikationsnetzwerk, insbesondere dem Internet, einen Onlinedienst bereit, der insbesondere einen Informationsaustausch und/oder einen Beziehungsaufbau zwischen den Nutzern ermöglicht, auch als Social Networking Service bezeichnet. Anbieter bzw. Betreiber einer entsprechenden Plattform stellen insbesondere die dazu erforderliche serverseitige Infrastruktur bereit, die Nutzer der Plattform mittels clientseitiger Anwendungen auf deren Endgeräten über das Kommunikationsnetzwerk nutzen können. Die serverseitige Infrastruktur der Anbieter bzw. Betreiber umfasst insbesondere Geräte und/oder Computerprogramme, welche die Funktionalitäten, Dienstprogramme, Daten und/oder dergleichen Betriebsmittel bzw. Ressourcen, die von Prozessen zur Ausführung benötigt werden, bereitstellt. Als sogenannte Clients können Nutzer der Plattform mit Geräten und/oder Computerprogrammen auf diese serverseitige Infrastruktur der Anbieter bzw. Betreiber der Plattform zugreifen und diese nutzen, insbesondere zum Erstellen, Veröffentlichen, Kommentieren, Annotieren, Weiterleiten und/oder Abonnieren von Informationen, insbesondere Medieninhalten, wie Text, Audio, Bild, Foto, und/oder Video, insbesondere sogenannte Videos im Kurzformat, sogenannte Shorts.

Die bisher bekannten Plattformen im sogenannten Social-Media- bzw. Social-Networking-Bereich erlauben je nach Ausgestaltung und/oder Ausprägung unterschiedliche soziale Interaktionen zwischen Nutzern, insbesondere umfassend eine Wechselwirkung zwischen wenigstens zwei Nutzern im Hinblick auf bestimmte Zwecke oder Ziele, insbesondere umfassend ein Erstellen, Veröffentlichen, Kommentieren, Annotieren, Weiterleiten und/oder Abonnieren von Informationen, beispielsweise zur Bereitstellung und/oder zum Austausch von Informationen, zur Abstimmung von Verhaltensweisen oder Handlungsweisen, und/oder dergleichen. Nutzer können dabei insbesondere einzelne Personen, soziale Gruppen, Institutionen, Organisationen, Gesellschaften und/oder Unternehmen sein. Nutzern wird es dabei insbesondere ermöglicht, sich im Internet zu vernetzen, sich also untereinander auszutauschen und mediale Inhalte einzeln, in einer definierten Gemeinschaft oder offen in der Gesellschaft zu erstellen, zu diskutieren und/oder weiterzugeben. Entsprechende Plattformen sind insofern geeignet, Wissen, Meinungen und/oder andere Informationen schnell und zielgerichtet zu verbreiten bzw. eine solche Verbreitung zu unterstützen.

Hinsichtlich der Möglichkeiten des Austauschs von Informationen sind die bisher bekannten Systeme bzw. Plattformen, insbesondere Soziale Medien Plattformen (Social Media Platforms) limitiert, insbesondere hinsichtlich der Einfachheit der Nutzung aber auch hinsichtlich einer vielseitigeren Anwendbarkeit und/oder einem abgesichertem Austausch der Informationen.

Zur Erweiterung der Möglichkeiten eines Informationsaustauschs und/oder zur Auflösung bzw. zumindest Reduzierung der bisher gegebenen Limitierungen wird mit der vorliegenden Erfindung ein System bzw. eine Plattform, insbesondere Soziale Medien Plattform, zum wechselseitigen Austausch von Informationen, insbesondere Medieninhalten, zwischen Nutzern des Systems bzw. der Plattform über ein Kommunikationsnetzwerk, insbesondere Internet, insbesondere zum Erstellen, Veröffentlichen, Kommentieren, Annotieren, Weiterleiten und/oder Abonnieren von Informationen, insbesondere Medieninhalten, mittels wenigstens eines vom jeweiligen Nutzer dazu eingesetzten Endgerätes, vorgeschlagen, wobei die Informationen, insbesondere Medieninhalte, zumindest teilweise den Nutzern eine computergestützte Erweiterung der Realitätswahrnehmung mittels wenigstens einem Endgerät ermöglichen, insbesondere eine virtuelle Realität (Virtual Reality (VR)) und/oder eine erweiterte Realität (Augmented Reality (AR)) durch Darstellung von virtuellen, vorzugsweise dreidimensionalen Medieninhalten, besonders bevorzugt in Echtzeit, seitens des wenigstens einen Endgerätes, wobei Container, insbesondere Medien-Container, für seitens wenigstens eines Endgerätes wiedergebbare Informationen, insbesondere Medieninhalte, vorgesehen sind, die von wenigstens einem Nutzer mit wenigstens einem Endgerät zum Erstellen, Veröffentlichen, Kommentieren, Annotieren, Weiterleiten und/oder Abonnieren von Informationen, insbesondere Medieninhalten, nutzbar sind bzw. genutzt werden, wobei die seitens wenigstens eines Endgerätes wiedergebbaren Informationen, insbesondere Medieninhalte, eines Containers, insbesondere Medien-Containers, seitens des Endgerätes wenigstens eines Nutzers in einem vom Container, insbesondere Medien-Container, bereitgestellten virtuellen, dreidimensionalem Darstellungsraum wiedergebbar sind bzw. wiedergegeben werden, und der virtuelle, dreidimensionale Darstellungsraum mittels georeferenzierten Daten (Geodaten), vorzugsweise mittels raumbezogener Anker, einem Raum in der realen, physischen Welt zuordbar ist bzw. zugeordnet ist.

Der Erfindung liegt dabei insbesondere die Erkenntnis zugrunde, dass durch eine computergestützte Erweiterung der Realitätswahrnehmung, insbesondere eine virtuelle Realität (Virtual Reality (VR)) und/oder eine erweiterte Realität (Augmented Reality (AR)) durch Darstellung von virtuellen, vorzugsweise dreidimensionalen Medieninhalten, besonders bevorzugt in Echtzeit, seitens des wenigstens einen Endgerätes, die Möglichkeiten eines Informationsaustauschs zwischen Nutzern des Systems bzw. der Plattform erweiterbar und insbesondere mit weiteren Funktionalitäten versehbar ist. Der erfindungsgemäße Container dient vorteilhafterweise insbesondere zur Aufnahme seitens eines Endgerätes wiederzugebener Medieninhalte und stellt für diese einen virtuellen, dreidimensionalem Darstellungsraum bereit, in dem die Informationen, insbesondere Medieninhalte, seitens eines Endgerätes wiedergebbar sind bzw. wiedergegeben werden. Der virtuelle, dreidimensionale Darstellungsraum des Containers ist dabei vorteilhafterweise mittels georeferenzierten Daten (Geodaten), vorzugsweise mittels raumbezogener Anker, einem Raum (Rr) in der realen, physischen Welt zuordbar bzw. zugeordnet.

Ein Container bzw. Containerformat im Sinne der vorliegenden Erfindung ist insbesondere ein Objekt mit einer Datenstruktur, welche zur Speicherung und/oder Organisation von Daten dient, die in einer bestimmten Art und Weise angeordnet und/oder verknüpft werden, insbesondere um den Zugriff auf sie und/oder ihre Verwaltung effizient ermöglichen bzw. realisieren zu können. Ein erfindungsgemäßer Container bzw. ein erfindungsgemäßes Containerformat legt dabei vorteilhafterweise eine Datenstruktur fest, mit der einzelne Datenströme eventuell verschiedener Formate von Medieninhalten zu einem Datenstrom zusammengeführt werden können, beispielsweise in einer seitens einer Datenbank gespeicherten Datei (Containerdatei), insbesondere durch sogenanntes Multiplexing. So können in einem Container bzw. Containerformat enthaltene Daten, insbesondere Medieninhalte, vorteilhafterweise zusammengeführt werden, beispielsweise Videodaten mit Audiodaten derart, dass sie einen abspielbaren Film ergeben oder Textinformationen mit Bildern und/oder anderen Informationen derart, dass sie ein Verbunddokument bzw. eine Kombinationsdatei ergeben. Medien-Containerformate werden insbesondere für die gemeinsame Speicherung von Bild- und Tondaten eines Spielfilms oder dergleichen in einem einzigen Datenstrom verwendet, wie beispielsweise bei MPEG-4, einem MPEG-Standard der Moving Picture Experts Group (MPEG), der unter anderem Verfahren zur Video- und Audiodatenkompression beschreibt (vgl. beispielsweise auch ISO/IEC-14496) oder beispielsweise bei AVI (Audio Video Interleave (AVI)) der Microsoft Corporation. Das Zusammenführen der verschiedenen Medieninhalte, beispielsweise Audio- und Videospuren, in einen Container eines bestimmten Formats übernimmt vorteilhafterweise ein Multiplexer. Bei der Wiedergabe werden die Spuren vorteilhafterweise entsprechend durch einen Demultiplexer bzw. Splitter wieder getrennt, um dann von einem Dekodierer dekodiert werden zu können. Die dekodierten Daten werden dann seitens eines Endgerätes wiedergegeben bzw. zur Wiedergabe gebracht. Erfindungsgemäß sind vorteilhafterweise als Medieninhalte Text, Audio, Bild, Foto, und/oder Video, insbesondere sogenannte Videos im Kurzformat, Animation, dreidimensionale Animation (3D-Animation) und/oder dreidimensionale Modell (3D-Modell) vorgesehen.

Erfindungsgemäß ist damit eine Plattform zur Darstellung von virtuellen dreidimensionalen Inhalten (3D-Inhalten) in einem physischen Raum bereitgestellt.

Die erfindungsgemäße Plattform bietet vorteilhafterweise einen einfachen Zugang und vielfältige Einsatzmöglichkeiten. In einer vorteilhaften Ausgestaltung der Erfindung ist die Plattform über das World Wide Web und Instant Applikation (Instant App) seitens des Endgerätes des Nutzers, also ohne weitere Installation von Software, und bei Bedarf und/oder für weitere Funktionen auch als sogenannte native Applikation (native App) verfügbar. Vorteilhafterweise ist die Plattform sowohl mittels Smartphone und/oder Tablet als Endgerät, als auch mit XR-Brillen, wie beispielsweise "Apple Vision Pro" der Apple Inc., "Quest3" der Meta Platforms Inc., XR-Brillen der Xreal Inc. und/oder dergleichen XR-Brillen zu erreichen und nutzbar.

Eine besonders vorteilhafte Anwendung der Erfindung ist in der erfindungsgemäßen Nutzung der Plattform im Bereich von Werbung und/oder Marketing gegeben, insbesondere da man Nutzer-spezifische (User-spezifische) Inhalte jeglicher Art an nahezu jedem Ort zugänglich machen kann.

Die georeferenzierten Daten bzw. Geodaten der realen, physischen Welt sind insbesondere digitale Daten und/oder Umweltdaten, denen auf der Erdoberfläche eine bestimmte räumliche Lage zugewiesen werden kann, sogenannte Georeferenz. Die georeferenzierten Daten bzw. Geodaten der realen, physischen Welt sind insbesondere das Ausgangsmaterial für Karten, beispielsweise für sogenannte Geoinformationssysteme (GIS), Geographische Informationssysteme (GIS) oder Räumliche Informationssysteme (RIS), die insbesondere eine Erfassung, Bearbeitung, Organisation, Analyse und/oder Präsentation räumlicher Daten ermöglichen. Mit entsprechenden georeferenzierten Daten bzw. Geodaten der realen, physischen Welt kann insbesondere die Erdoberfläche als Straßenkarte oder als Luft- bzw. Satellitenbild betrachtet werden, wie beispielsweise mit "Google Maps" des Unternehmens Google LLC oder mit "Apple Maps" bzw. "Apple Karten" des Unternehmens Apple Inc.

Eine weitere vorteilhafte Ausgestaltung der Erfindung sieht vor, dass die Zuordnung eindeutig, vorzugsweise eineindeutig, ist, insbesondere derart, dass ein virtueller, dreidimensionaler Darstellungsraum eines Containers genau einem entsprechenden georeferenziertem Raum in der realen, physischen Welt zuordbar ist bzw. zugeordnet ist, bzw. umgekehrt einem georeferenziertem Raum (Rr) in der realen, physischen Welt genau ein virtueller, dreidimensionaler Darstellungsraum eines Containers zuordbar ist bzw. zugeordnet ist. Vorteilhafterweise ist bzw. wird jedem Container dabei genau ein georeferenzierter Ort zugeordnet bzw. jedem georeferenzierten Ort genau ein Container.

Erfindungsgemäß ist ferner vorgesehen, dass die seitens wenigstens eines Endgerätes wiedergebbaren Informationen, insbesondere Medieninhalte, eines Containers, insbesondere Medien-Containers, seitens des Endgerätes eines Nutzers in dem virtuellen, dreidimensionalem Darstellungsraum wiedergebbar sind bzw. wiedergegeben werden, wenn der Nutzer mit seinem Endgerät
- sich an oder in dem Raum in der realen, physischen Welt befindet,
- sich mit einem vorzugsweise vorgebbaren und/oder einstellbaren Abstand, insbesondere Mindestabstand, zu dem Raum in der realen, physischen Welt befindet,
   und/oder
- den Raum in der realen, physischen Welt mittels bzw. über eine virtuelle Darstellung der physischen Welt, insbesondere eine digitale Karte räumlicher Daten, in der raumbezogene Gegenstände, insbesondere auch Videos oder Fotos, beispielsweise von einem Gebäude, Fahrzeuge, Personen, Sachverhalte und/oder Prozesse, maßstäblich generalisiert und graphisch in ihren Raumbeziehungen, vorzugsweise in Echtzeit, darstellbar sind bzw. dargestellt sind, auswählt bzw. anwählt.

Wenn sich ein Nutzer mit seinem Endgerät in der realen physischen Welt an dem georeferenzierten Ort oder in dessen vorgebbarer Nähe befindet, erhält dieser bzw. dieses über das System bzw. die Plattform vorteilhafterweise ein Triggersignal, welches den Nutzer auf das Vorhandensein eines entsprechenden virtuellen, dreidimensionalem Containers hinweist. Das System bzw. die Plattform kennt bzw. erhält vorteilhafterweise den aktuellen Standort bzw. die Position des Endgeräts des Nutzers in der realen, physischen Welt. Die Positionsbestimmung erfolgt vorteilhafterweise mittels GPS (GPS: Global Positioning System), Galileo, GLONASS, Beidou, Triangulation, einer Funkzelleninformation eines Mobilfunknetzes und/oder mittels standortbezogener Dienste (Location-based Services (LBS), bzw. Location Dependent Services (LDS)). Andere Positionsbestimmungsverfahren, wie vorteilhafterweise differential GPS und/oder eine WLAN-basierte Ortung (WLAN: Wireless Local Area Network), sind ebenfalls möglich, insbesondere alternativ und/oder ergänzend.

Eine besonders bevorzugte Ausgestaltung der Erfindung sieht vor, dass der raumbezogene Anker eines virtuellen, dreidimensionalen Darstellungsraums eines Containers als Verknüpfung bzw. elektronischer Verweis, sogenannter Link, auf den Container nutzbar ist bzw. genutzt wird, beispielsweise zum Abrufen der Inhalte eines Containers bzw. einer Containerdatei seitens einer Datenbank.

Eine weitere besonders vorteilhafte Ausgestaltung der Erfindung sieht für den Nutzer der Plattform zum Aufruf eines Containers bzw. eines von diesem bereitgestellten virtuellen, dreidimensionalen Raums zur Wiedergabe von Informationen, insbesondere Medieninhalten des Containers, vorzugsweise unabhängig von der tatsächlichen Position des Nutzers in der realen Welt, vorteilhafterweise zumindest wenigstens eine der folgende Möglichkeiten vor:
1. Auf einer seitens eines Endgerätes eines Nutzers der Plattform ist bzw. wird eine zweidimensionale Karte (2D-Karte), beispielsweise Apple Maps oder Google Maps, wiedergebbar bzw. wiedergegeben, auf bzw. in der ein Hinweis auf einen erfindungsgemäß georeferenzierten virtuellen, dreidimensionalen Darstellungsraum eines Containers wiedergebbar ist bzw. wiedergegeben wird, vorzugsweise in Form eines Symbols, insbesondere eines Würfels bzw. Würfelsymbols, welches dem Nutzer sich in seiner unmittelbaren Umgebung oder auch überall sonst befindliche, insbesondere in der realen Welt georeferenzierte virtuelle, dreidimensionale Darstellungsräume mit Informationen, insbesondere Medieninhalten, von Containern, anzeigt bzw. anzeigbar macht. Das angezeigte Symbol, insbesondere Würfelsymbol, ist bzw. wird von dem Nutzer der Plattform vorteilhafterweise als Verknüpfung bzw. elektronischer Verweis, sogenannter Link, auf den Container nutzbar bzw. genutzt, insbesondere zum Abrufen zumindest eines der Inhalte eines Containers bzw. einer Containerdatei seitens einer Datenbank. Das Symbol kann vorteilhafterweise mit dem raumbezogenen Anker eines virtuellen, dreidimensionalen Darstellungsraums eines Containers verknüpft sein bzw. diesen graphisch in der 2D-Karte repräsentieren öffnet sich bei Auswahl bzw. Anwahl eines Symbols durch den Nutzer seitens der 2D-Karte, beispielsweise durch ein sogenanntes Anklicken, vorteilhafterweise zunächst eine Kurzbeschreibung des bzw. zu dem Containerinhalt, die seitens des Endgerätes des Nutzers wiedergegeben wird, beispielsweise in der 2D-Karte, und nach einer weiteren Auswahl bzw. Anwahl, insbesondere einem weiteren Anklicken, kann der Nutzer dann den virtuellen, dreidimensionalen Darstellungsraum eines Containers mit dessen Informationen, insbesondere Medieninhalten, im eigenen Raum insbesondere nach seinen individuellen Bedürfnissen, Erfordernissen und/oder Interessen platzieren.
2. Seitens des Endgerätes des Nutzers der Plattform ist bzw. wird eine sogenannte Zeitleiste bzw. Timeline wiedergebbar bzw. wiedergegeben, welche vorzugsweise auf den individuellen Bedürfnissen, Erfordernissen, Präferenzen und/oder Interessen des Nutzers der Plattform basiert. Vorteilhafterweise kann der Nutzer der Plattform aus einer vorgebbaren Auswahl verschiedene virtuelle, dreidimensionale Darstellungsräume von Containern auswählen, welche er in seiner Umgebung betrachten möchte, insbesondere basierend auf den individuellen Bedürfnissen, Erfordernissen, Präferenzen und/oder Interessen des Nutzers. Die den individuellen Bedürfnisse, Erfordernisse, Präferenzen und/oder Interessen des Nutzers sind bzw. werden vorteilhafterweise mit wenigstens einem künstliche Intelligenz Algorithmus (KI-Algorithmus) ermittelt.
3. Nach Scannen eines sogenannten QR-Codes (QR: Quick Response) oder mittels eines RFID-Tags (RFID: Radio-Frequency IDentification) oder Auswahl bzw. Anwahl eines Weblinks wird seitens des Endgerätes des Nutzers der entsprechend verknüpfte Container aufgerufen und seitens des Endgerätes des Nutzers dessen virtueller, dreidimensionaler Darstellungsraum nebst den Informationen, insbesondere Medieninhalten, wiedergegeben.

Eine weitere vorteilhafte Ausgestaltung der Erfindung sieht vor, dass die seitens wenigstens eines Endgerätes in einem virtuellen, dreidimensionalem Darstellungsraum eines Containers, insbesondere Medien-Containers, wiedergebbaren Informationen, insbesondere Medieninhalte, zumindest teilweise von einem Container auf wenigstens einen anderen Container übertragbar sind bzw. übertragen werden, insbesondere in wenigstens einen anderen Container kopierbar sind bzw. kopiert werden, vorzugsweise wenn der Nutzer mit seinem Endgerät
- sich an oder in dem Raum in der realen, physischen Welt befindet,
- sich mit einem vorzugsweise vorgebbaren und/oder einstellbaren Abstand, insbesondere Mindestabstand, zu dem Raum (Rr) in der realen, physischen Welt befindet,
   und/oder
- den Raum (Rr) in der realen, physischen Welt mittels bzw. über eine virtuelle Darstellung der physischen Welt, insbesondere eine digitale Karte räumlicher Daten, in der raumbezogene Gegenstände, insbesondere auch Videos oder Fotos, beispielsweise von einem Gebäude, Fahrzeuge, Personen, Sachverhalte und/oder Prozesse maßstäblich generalisiert und graphisch in ihren Raumbeziehungen, vorzugsweise in Echtzeit, darstellbar sind bzw. dargestellt sind, auswählt bzw. anwählt, beispielsweise als Verknüpfung bzw. Link zu dem Container bzw. zu einer Containerdatei seitens einer Datenbank.

Der Nutzer kann so vorteilhafterweise Inhalte eines Containers mitnehmen und an einem anderen Ort, beispielsweise zu Hause speichern oder in dem virtuellen, dreidimensionalem Darstellungsraum des Containers wiedergeben, insbesondere in einem Container bzw. einem virtuellen, dreidimensionalem Darstellungsraum, der vorteilhafterweise nicht georeferenziert ist oder sein muss. So kann der Nutzer beispielsweise ausprobieren, ob ein bestimmtes virtuell dargestelltes Fahrzeug mit seinen realen Abmessungen bzw. Dimensionen in der Realität auch bei ihm in seiner Garage platzierbar ist. Eine virtuelle Abbildung der Garage mit entsprechenden Dimensionen bzw. Abmessungen der Garage - und etwaig sich darin befindlicher bzw. angeordneter anderer Gegenstände oder dergleichen - dient dabei dann als virtueller dreidimensionaler Darstellungsraum, der nicht zwingend georeferenziert sein muss, aber sein kann. Der Nutzer kann so vorteilhafterweise Inhalte des Containers bei sich vor Ort, beispielsweise zu Hause, speichern oder wiedergeben ohne in der realen, physischen Welt an dem georeferenzierten Ort sein zu müssen. Erfindungsgemäß können die virtuellen, dreidimensionalen Darstellungsräume eines Containers so vorteilhafterweise auch unabhängig von ihrem Anker insbesondere in der Umgebung, insbesondere aktuellen bzw. derzeitigen Umgebung des Nutzers (Users) platziert bzw. positioniert und betrachtet bzw. konsumiert werden. Vorteilhafterweise ist bzw. wird der raumbezogene Anker eines virtuellen, dreidimensionalen Darstellungsraums eines Containers als Verknüpfung bzw. elektronischer Verweis, sogenannter Link, auf den Container nutzbar bzw. genutzt, beispielsweise zum Abrufen der Inhalte eines Containers bzw. einer Containerdatei seitens einer Datenbank.

Vorteilhafterweise weist der virtuelle, dreidimensionale Darstellungsraum eines Containers, insbesondere Medien-Containers, zur Wiedergabe von Informationen, insbesondere Medieninhalten seitens wenigstens eines Endgerätes eine auswählbare Form und vorzugsweise vorgebbare bzw. einstellbare Dimensionen bzw. Abmessungen in Bezug auf einen Raum in der realen physischen Welt auf, und ist bzw. wird seitens des wenigstens einen Endgerätes wenigstens eines Nutzers mit den entsprechenden Dimensionen bzw. Abmessungen der realen physischen Welt darstellbar bzw. dargestellt.

Eine weitere Ausgestaltung der Erfindung sieht vor, dass die Dimensionen bzw. Abmessungen eines virtuellen, dreidimensionalen Darstellungsraums eines Containers, insbesondere Medien-Containers, veränderbar, insbesondere skalierbar sind. So können die in dem virtuellen, dreidimensionalen Darstellungsraum des Containers vorgesehenen Informationen vorteilhafterweise ebenfalls mit skaliert und beispielsweise hinsichtlich ihrer Größen oder Abmessungen insbesondere von dem Nutzer angepasst werden. In einer vorteilhaften Ausgestaltung der Erfindung werden der virtuelle, dreidimensionale Darstellungsraum eines Containers und/oder die Informationen, insbesondere Medieninhalte eines Containers vorzugsweise automatisch hinsichtlich ihrer Abmessungen bzw. Dimensionen entsprechend den Abmessungen bzw. Dimensionen in der zugeordneten realen physischen Welt angepasst, insbesondere durch automatische Erkennung und Größenbestimmung von Objekten in der realen, physischen Welt.

Vorteilhafterweise sind die virtuellen, dreidimensionalen Darstellungsräume der Container, insbesondere Medien-Container, voneinander mit einem vorzugsweise vorgebbaren bzw. einstellbaren Abstand der realen, physischen Welt zuordbar bzw. zugeordnet.

Eine weitere vorteilhafte Ausgestaltung der Erfindung sieht vor, dass die virtuellen, dreidimensionalen Darstellungsräume von wenigstens zwei Containern, insbesondere Medien-Containern, miteinander kombinierbar sind. So ist erfindungsgemäß vorteilhafterweise ein virtueller, dreidimensionaler Darstellungsraum bereitstellbar, der sich aus mehreren virtuellen, dreidimensionalen Darstellungsräumen von Containern und vorteilhafterweise deren Inhalten zusammensetzen lässt.

Eine weitere vorteilhafte Ausgestaltung der Erfindung sieht vor, dass ein virtueller, dreidimensionaler Darstellungsraum eines Containers, insbesondere Medien-Containers, hinsichtlich seiner Lage und/oder Ausrichtung, insbesondere bezogen auf seine Zuordnung in der realen physischen Welt, veränderbar ist, vorzugsweise rotierbar bzw. verschwenkbar ist, insbesondere mittels georeferenzierter Daten (Geodaten), vorzugsweise mittels raumbezogener Anker. In einer vorteilhaften Ausgestaltung der Erfindung werden der virtuelle, dreidimensionale Darstellungsraum eines Containers und/oder die Informationen, insbesondere Medieninhalte eines Containers vorzugsweise automatisch hinsichtlich ihrer Lage und/oder Ausrichtung, insbesondere bezogen auf eine Zuordnung in der realen physischen Welt, verändert, insbesondere durch automatische Erkennung und Zuordnung von Objekten in der realen, physischen Welt. Erfindungsgemäß sind so der virtuelle, dreidimensionale Darstellungsraum eines Containers und/oder dessen Medieninhalte hinsichtlich ihrer Lage und/oder Ausrichtung, insbesondere bezogen auf eine Zuordnung in der realen physischen Welt, veränderbar.

Eine besonders vorteilhafte Ausgestaltung der Erfindung sieht vor, dass wenigstens ein virtueller, dreidimensionaler Darstellungsraum eines Containers, insbesondere Medien-Containers, mittels einer Blockkette (Blockchain) abgesichert ist bzw. abgesichert wird, vorzugsweise im Hinblick auf ein Erstellen, Veröffentlichen, Kommentieren, Annotieren, Weiterleiten und/oder Abonnieren von Informationen, insbesondere Medieninhalten, des Containers oder im Hinblick auf eine Veräußerung oder Vermietung des Containers bzw. des virtuellen, dreidimensionalen Darstellungsraums eines Containers. Hierdurch werden insbesondere die Möglichkeiten, Funktionalitäten und/oder Anwendungen eines Informationsaustauschs weiter erweitert und sind zudem vorteilhafterweise vor Missbrauch, Betrug und/oder dergleichen geschützt bzw. absicherbar, beispielsweise hinsichtlich einem Kopieren oder Verändern von Inhalten, der Echtheit der Inhalte oder dergleichen.

Vorteilhafterweise weist das erfindungsgemäße System bzw. die erfindungsgemäße Plattform eine Augmented Reality-Programmierschnittstelle auf, die vorzugsweise Mittel zur Erfassung der einen Nutzer bzw. das von ihm dabei genutzte Endgerät umgebenden physischen Welt, insbesondere in Echtzeit, vorzugsweise umfassend beispielsweise
- ein Ermitteln von Objekten, von Größenverhältnissen, Anordnungsmustern und/oder Flächen in der umgebenden physischen Welt,
- Mittel zur Bewegungsverfolgung (Tracking) von Objekten,
- Mittel zur Analyse von Licht- und/oder Schattenquellen von Objekten,
   und/oder
- Mittel zur Anordnung bzw. Platzierung wenigstens eines virtuellen Objektes in dem von bzw. mit einem Container bereitgestellten virtuellen, dreidimensionalen Darstellungsraum eines Containers, insbesondere Mediencontainers.

Eine bevorzugte Ausgestaltung der Erfindung sieht vor, dass der virtuelle, dreidimensionale Darstellungsraum eines Containers, insbesondere Medien-Containers, für Informationen, insbesondere Medieninhalte, ein Würfel ist, vorzugsweise mit den Abmessungen bzw. Dimensionen von Länge-Breite-Höhe mit 2 Meter mal 2 Meter mal 2 Meter bezogen auf die reale, physische Welt, wobei vorzugsweise der Mittelpunkt des Würfels den Ankerpunkt des raumbezogener Ankers der realen, physischen Welt bildet, welcher besonders vorzugsweise ein bezogen auf die reale physische Welt zumindest hinsichtlich der Höhenlage nivellierter Terrainanker ist. Denkbar und Gegenstand der vorliegenden Erfindung sind ferner andere Formen des virtuellen, dreidimensionalen Darstellungsraum eines Containers, wie insbesondere Pyramiden, Dome oder Sphären, Kegel, Prismen, Zylinder, Kugeln, oder auch nicht geometrische Körper bzw. Strukturen, beispielsweise Fahrzeuge, Tiere, Pflanzen, Personen, Figuren, Früchte, Gebäude, beispielsweise Firmengebäude, Logos, Produkte, Waren und/oder dergleichen, insbesondere mit unterschiedlichen Abmessungen.

Eine bevorzugte Ausgestaltung der Erfindung sieht vor, dass insbesondere die als Würfel ausgebildeten Container vorteilhafterweise aus maximal vier Komponenten bestehen: Dem Würfel, vorteilhafterweise in verschiedenen Designs bzw. Ausgestaltungen, als Container, einem dreidimensionalen Inhalt (3D Inhalt), einem Text- und/oder Creator-Label, und einem Bild- und/oder Videoinhalt. Vorteilhafterweise können diese Komponenten vom Nutzer auf einfachste Weise in einem 5-Schritte-Prozess erstellt, über das Kommunikationsnetzwerk auf die Plattform hochgeladen und in der physischen Welt an einem zugewiesenen Ort verankert werden. Eine besonders vorteilhafte Ausgestaltung der Erfindung sieht vor, dass die Inhalts- bzw. Content-Erstellung in 5 Schritten (5-Schritte-Prozess) wie folgt gegeben ist bzw. erfolgt:
1. Festlegung des Namens, einer Kurzbeschreibung, einer Kategorie und ggf. mehrere Schlüsselworte ("Tags") für den virtuellen, dreidimensionalen Darstellungsraum, insbesondere Würfel. Dabei ist bzw. kann der virtuelle, dreidimensionale Darstellungsraum, insbesondere Würfel, vorzugsweise über die Schlüsselworte und/oder Kategorien von anderen Nutzern des Systems bzw. der Plattform auffindbar bzw. gefunden werden.
2. Auswahl des äußeren Designs des virtuellen, dreidimensionalen Darstellungsraums, vorliegend des Würfels. Vorteilhafterweise kommen dabei vordefinierte Designs, beispielsweise durchsichtige Glasseiten, Betonboden, Holzparkett, ein Standfuß, und/oder dergleichen zum Einsatz, die von einem Server heruntergeladen und dem Nutzer zur Auswahl angeboten werden.
3. Hinzufügen eines dreidimensionalen Inhalts (3D-Inhalts) und gegebenenfalls verschiedener Medieninhalte, insbesondere Video, Audio, Bilder und/oder dergleichen. Für die Erstellung eines dreidimensionalen Modells (3D Modells) sind dabei erfindungsgemäß vorteilhafterweise folgende Optionen vorgesehen:
   a) Für zweidimensionale Inhalte (2D-Content) ist das Aufnehmen von Fotos oder Videos oder das Verwenden vorhandener Bilder aus einer sogenannten Bildergalerie des Nutzers vorgesehen, die dann auf über die Plattform hochgeladen und in dem virtuellen, dreidimensionalen Darstellungsraum, insbesondere Würfel, anordbar sind bzw. angeordnet werden können.
   b) Für bestehende dreidimensionale Inhalte (3D-Inhalte), beispielsweise erstellt in Blender, Maya oder dergleichen Anwendungen, können diese über die Plattform vom Nutzer hochgeladen und in dem virtuellen, dreidimensionalen Darstellungsraum, insbesondere Würfel, angeordnet werden.
   c) Alternativ und/oder ergänzend können Nutzer der Plattform dreidimensionale Inhalte (3D-Inhalte) vorteilhafterweise mit einem integrierten Erstellungswerkzeug erstellen, das vorteilhafterweise zahlreiche Vorlagen, 3D-Objekte und/oder andere nützliche Funktionen zur Gestaltung anbietet und bereithält.
   d) Das Erstellen eines dreidimensionalen Scans (3D Scans) von physischen Gegenständen, vorzugsweise beispielsweise mit einem Smartphone des Nutzers, ist vorteilhafterweise ebenfalls vorgesehen bzw. ermöglicht.
   e) Vorteilhafterweise ist auch und/oder ergänzend eine Anbindung an Plattformen oder dergleichen, die dreidimensionale Objekte (3D-Objekte) kostenlos und/oder kostenpflichtig anbieten vorgesehen bzw. ermöglicht, beispielsweise mittels Sketchfab der Sktechfab Inc. oder dergleichen.
4. Hinzufügen eines Beschreibungstextes und/oder eines sogenannten Titel- bzw. Coverbildes.
5. Verankern des virtuellen, dreidimensionalen Darstellungsraums, vorliegend des Würfels, an einer - dem Nutzer zugeordneten Position in der realen, physischen Welt. Vorteilhafterweise entweder indem der Nutzer sich an dieser Position befindet, oder über eine zweidimensionale Karte. Im Backend des Systems bzw. der Plattform werden dann vorteilhafterweise die GPS-Position, die Triangulationsdaten und/oder weitere positionstrackingrelevante Daten eindeutig, besonders vorzugsweise eineindeutig, mit dem virtuellen, dreidimensionalen Darstellungsraum, vorliegend dem Würfel, verknüpft.

Vorteilhafterweise werden die fünf Komponenten des 5-Schritte-Prozesses im Backend des Systems bzw. der Plattform eineindeutig einem virtuellen, dreidimensionalen Darstellungsraum, vorliegend vorzugsweise einem Würfel, und wiederum einem Nutzer zugeordnet.

Eine besonders bevorzugte Ausgestaltung der Erfindung sieht vor, dass der virtuelle, dreidimensionale Darstellungsraum eines Containers, insbesondere Medien-Containers, vorzugsweise für Informationen, insbesondere Medieninhalte, mit wenigstens einer weiteren Dimension versehbar bzw. versehen ist bzw. versehen wird, welche vorzugsweise ein zeitlicher Parameter und/oder ein Entwicklungs- bzw. Evolutionsparameter ist. So können in dem virtuellen, dreidimensionalen Darstellungsraum eines Containers dieser oder dessen Inhalte vorteilhafterweise hinsichtlich einer zeitlichen Veränderung betrachtet werden, insbesondere nach Art eines sogenannten Zeitstrahls oder einer sogenannten Zeitleiste. Nutzer können so vorteilhafterweise erfindungsgemäße virtuellen, dreidimensionale Darstellungsräume über eine Zeitleiste bzw. Timeline erkunden, insbesondere die Inhalte kommentieren, liken, teilen und/oder dergleichen. Als Entwicklungs- bzw. Evolutionsparameter als weitere erfindungsgemäße Dimension können vorteilhafterweise bestimmte Serien- oder Produktnummern vorgesehen werden, um so beispielsweise die Entwicklungshistorie eines Objekts bzw. Produkts darstellen zu können, beispielsweise die Evolution eines Fahrzeugs oder die Entwicklungsstufen eines Insekts, beispielsweise eine Schmetterlings.

Eine weitere vorteilhafte Ausgestaltung der Erfindung sieht vor, dass mittels georeferenzierten Daten (Geodaten), vorzugsweise mittels raumbezogener Anker, der realen, physischen Welt zuordbare bzw. zugeordnete virtuelle, dreidimensionale Darstellungsräume eines Containers, insbesondere Medien-Container, für Informationen, insbesondere Medieninhalte, für bestimmte Ziel- bzw. Interessengruppen vorgesehen sind. So können vorteilhafterweise an einem Ort der realen physischen Welt verschiedene virtuelle, dreidimensionale Darstellungsräume vorgesehen sein, die für die jeweilige Ziel- bzw. Interessengruppe am gleichen Ort unterschiedliche Inhalte zur Wiedergabe bereithalten, beispielsweise für Autointeressierte, Kosmetikinteressierte und/oder dergleichen. So können vorteilhafterweise beispielsweise auch bei Mehrfamilienhäusern am gleichen Ort verschiedene virtuelle, dreidimensionale Darstellungsräume von Containern von bzw. für unterschiedliche Nutzer vorgesehen sein.

Eine weitere vorteilhafte Ausgestaltung der Erfindung sieht vor, dass der Funktionsumfang und/oder mögliche Funktionsparameter eines Containers vorgebbar oder einstellbar ist. So können beispielsweise sogenannte Premiumnutzer mehr Funktionen oder Funktionsparameter für Darstellungsräume und/oder deren Inhalte aufweisen als sogenannte Basisnutzer. Ein Basisnutzer kann beispielsweise Inhalte eines Containers nur wiedergeben, während ein Premiumnutzer die Inhalte individuell anpassen kann, beispielsweise hinsichtlich Größe, Farbe, Textur und/oder dergleichen Inhaltsparameter. So kann insbesondere eine weiter verbesserte Nutzerakzeptanz der erfindungsgemäßen Plattform und der virtuellen, dreidimensionalen Darstellungsräume von Containern verwirklicht werden, insbesondere als Abonnement oder dergleichen.

Gegenstand der vorliegenden Erfindung ist ferner ein Verfahren zum wechselseitigen Austausch von Informationen, insbesondere Medieninhalten, zwischen Nutzern eines System bzw. einer Plattform, insbesondere eines erfindungsgemäßen Systems bzw. einer erfindungsgemäßen Plattform, über ein Kommunikationsnetzwerk, insbesondere Internet, insbesondere zum Erstellen, Veröffentlichen, Kommentieren, Annotieren, Weiterleiten und/oder Abonnieren von Informationen, insbesondere Medieninhalten, mittels wenigstens eines vom jeweiligen Nutzer dazu eingesetzten Endgerätes, insbesondere Smartphone, Tablet, einer sogenannten XR-Brille und/oder dergleichen Endgerät, wobei die Informationen, insbesondere Medieninhalte, zumindest teilweise den Nutzern eine computergestützte Erweiterung der Realitätswahrnehmung mittels wenigstens einem Endgerät ermöglichen, insbesondere eine virtuelle Realität (Virtual Reality (VR)) und/oder eine erweiterte Realität (Augmented Reality (AR)) durch Darstellung von virtuellen, vorzugsweise dreidimensionalen Medieninhalten, besonders bevorzugt in Echtzeit, seitens des wenigstens einen Endgerätes, wobei Container, insbesondere Medien-Container, für seitens wenigstens eines Endgerätes wiedergebbare Informationen, insbesondere Medieninhalte, vorgesehen sind, die von wenigstens einem Nutzer mit wenigstens einem Endgerät zum Erstellen, Veröffentlichen, Kommentieren, Annotieren, Weiterleiten und/oder Abonnieren von Informationen, insbesondere Medieninhalten, nutzbar sind oder genutzt werden, wobei die seitens wenigstens eines Endgerätes wiedergebbaren Informationen, insbesondere Medieninhalte, eines Containers, insbesondere Medien-Containers, seitens des Endgerätes wenigstens eines Nutzers in einem vom Container, insbesondere Medien-Container, bereitgestellten virtuellen, dreidimensionalem Darstellungsraum wiedergebbar sind bzw. wiedergegeben werden, und der virtuelle, dreidimensionale Darstellungsraum mittels georeferenzierten Daten (Geodaten), vorzugsweise mittels raumbezogener Anker, einem Raum in der realen, physischen Welt zuordbar ist bzw. zugeordnet wird.

Bei dem erfindungsgemäßen Verfahren ist die Zuordnung vorteilhafterweise eindeutig, vorzugsweise eineindeutig, bzw. wird die Zuordnung vorteilhafterweise eindeutig, vorzugsweise eineindeutig, vorgenommen, insbesondere derart, dass ein virtueller, dreidimensionaler Darstellungsraum genau einem entsprechenden georeferenziertem Raum in der realen, physischen Welt zuordbar ist bzw. zugeordnet wird, bzw. umgekehrt einem georeferenziertem Raum in der realen, physischen Welt genau ein virtueller, dreidimensionaler Darstellungsraum zuordbar ist bzw. zugeordnet wird.

Bei dem erfindungsgemäßen Verfahren ist vorteilhafterweise vorgesehen, dass die seitens wenigstens eines Endgerätes wiedergebbaren Informationen, insbesondere Medieninhalte, eines Containers, insbesondere Medien-Containers, seitens des Endgerätes eines Nutzers in dem virtuellen, dreidimensionalem Darstellungsraum wiedergebbar sind bzw. wiedergegeben werden, wenn der Nutzer mit seinem Endgerät
- sich an oder in dem Raum in der realen, physischen Welt befindet,
- sich mit einem vorzugsweise vorgebbaren und/oder einstellbaren Abstand, insbesondere Mindestabstand, zu dem Raum in der realen, physischen Welt befindet,
   und/oder
- den Raum in der realen, physischen Welt mittels bzw. über eine virtuelle Darstellung der physischen Welt, insbesondere eine digitale Karte räumlicher Daten, in der raumbezogene Gegenstände, insbesondere auch Videos oder Fotos, beispielsweise von einem Gebäude, Fahrzeuge, Personen, Sachverhalte und/oder Prozesse maßstäblich generalisiert und graphisch in ihren Raumbeziehungen, vorzugsweise in Echtzeit, darstellbar sind bzw. dargestellt sind, auswählt bzw. anwählt.

Eine besonders bevorzugte Ausgestaltung der Erfindung sieht vor, dass der raumbezogene Anker eines virtuellen, dreidimensionalen Darstellungsraums eines Containers als Verknüpfung bzw. elektronischer Verweis, sogenannter Link, auf den Container nutzbar ist bzw. genutzt wird, beispielsweise zum Abrufen der Inhalte eines Containers bzw. einer Containerdatei seitens einer Datenbank.

Eine weitere besonders vorteilhafte Ausgestaltung der Erfindung sieht für den Nutzer der Plattform zum Aufruf eines Containers bzw. eines von diesem bereitgestellten virtuellen, dreidimensionalen Raums zur Wiedergabe von Informationen, insbesondere Medieninhalten des Containers, vorzugsweise unabhängig von der tatsächlichen Position des Nutzers in der realen Welt, vorteilhafterweise zumindest wenigstens eine der folgende Verfahrensweisen vor:
1. Auf einer seitens eines Endgerätes eines Nutzers der Plattform ist bzw. wird eine zweidimensionale Karte (2D-Karte), beispielsweise Apple Maps oder Google Maps, wiedergebbar bzw. wiedergegeben, auf bzw. in der ein Hinweis auf einen erfindungsgemäß georeferenzierten virtuellen, dreidimensionalen Darstellungsraum eines Containers wiedergebbar ist bzw. wiedergegeben wird, vorzugsweise in Form eines Symbols, insbesondere eines Würfels bzw. Würfelsymbols, welches dem Nutzer sich in seiner unmittelbaren Umgebung oder auch überall sonst befindliche, insbesondere in der realen Welt georeferenzierte virtuelle, dreidimensionale Darstellungsräume mit Informationen, insbesondere Medieninhalten, von Containern, anzeigt bzw. anzeigbar macht. Das angezeigte Symbol, insbesondere Würfelsymbol, ist bzw. wird von dem Nutzer der Plattform vorteilhafterweise als Verknüpfung bzw. elektronischer Verweis, sogenannter Link, auf den Container nutzbar bzw. genutzt, insbesondere zum Abrufen zumindest eines der Inhalte eines Containers bzw. einer Containerdatei seitens einer Datenbank. Das Symbol kann vorteilhafterweise mit dem raumbezogenen Anker eines virtuellen, dreidimensionalen Darstellungsraums eines Containers verknüpft sein bzw. diesen graphisch in der 2D-Karte repräsentieren öffnet sich bei Auswahl bzw. Anwahl eines Symbols durch den Nutzer seitens der 2D-Karte, beispielsweise durch ein sogenanntes Anklicken, vorteilhafterweise zunächst eine Kurzbeschreibung des bzw. zu dem Containerinhalt, die seitens des Endgerätes des Nutzers wiedergegeben wird, beispielsweise in der 2D-Karte, und nach einer weiteren Auswahl bzw. Anwahl, insbesondere einem weiteren Anklicken, kann der Nutzer dann den virtuellen, dreidimensionalen Darstellungsraum eines Containers mit dessen Informationen, insbesondere Medieninhalten, im eigenen Raum insbesondere nach seinen individuellen Bedürfnissen, Erfordernissen und/oder Interessen platzieren.
2. Seitens des Endgerätes des Nutzers der Plattform ist bzw. wird eine sogenannte Zeitleiste bzw. Timeline wiedergebbar bzw. wiedergegeben, welche vorzugsweise auf den individuellen Bedürfnissen, Erfordernissen, Präferenzen und/oder Interessen des Nutzers der Plattform basiert. Vorteilhafterweise kann der Nutzer der Plattform aus einer vorgebbaren Auswahl verschiedene virtuelle, dreidimensionale Darstellungsräume von Containern auswählen, welche er in seiner Umgebung betrachten möchte, insbesondere basierend auf den individuellen Bedürfnissen, Erfordernissen, Präferenzen und/oder Interessen des Nutzers. Die den individuellen Bedürfnisse, Erfordernisse, Präferenzen und/oder Interessen des Nutzers sind bzw. werden vorteilhafterweise mit wenigstens einem künstliche Intelligenz Algorithmus (KI-Algorithmus) ermittelt.
3. Nach Scannen eines sogenannten QR-Codes (QR: Quick Response) oder mittels eines RFID-Tags (RFID: Radio-Frequency IDentification) oder Auswahl bzw. Anwahl eines Weblinks wird seitens des Endgerätes des Nutzers der entsprechend verknüpfte Container aufgerufen und seitens des Endgerätes des Nutzers dessen virtueller, dreidimensionaler Darstellungsraum nebst den Informationen, insbesondere Medieninhalten, wiedergegeben.

Bei dem erfindungsgemäßen Verfahren ist vorteilhafterweise vorgesehen, dass die seitens wenigstens eines Endgerätes in einem virtuellen, dreidimensionalem Darstellungsraum eines Containers, insbesondere Medien-Containers, wiedergebbaren Informationen, insbesondere Medieninhalte, zumindest teilweise von einem Container auf wenigstens einen anderen Container übertragbar sind bzw. übertragen werden, insbesondere in wenigstens einen anderen Container kopierbar sind bzw. kopiert werden, vorzugsweise wenn der Nutzer mit seinem Endgerät
- sich an oder in dem Raum in der realen, physischen Welt befindet,
- sich mit einem vorzugsweise vorgebbaren und/oder einstellbaren Abstand, insbesondere Mindestabstand, zu dem Raum in der realen, physischen Welt befindet,
   und/oder
- den Raum in der realen, physischen Welt mittels bzw. über eine virtuelle Darstellung der physischen Welt, insbesondere eine digitale Karte räumlicher Daten, in der raumbezogene Gegenstände, insbesondere auch Videos oder Fotos, beispielsweise von einem Gebäude, Fahrzeuge, Personen, Sachverhalte und/oder Prozesse maßstäblich generalisiert und graphisch in ihren Raumbeziehungen, vorzugsweise in Echtzeit, darstellbar sind bzw. dargestellt sind, auswählt bzw. anwählt.

Vorteilhafterweise ist bzw. wird der raumbezogene Anker eines virtuellen, dreidimensionalen Darstellungsraums eines Containers als Verknüpfung bzw. elektronischer Verweis, sogenannter Link, auf den Container nutzbar bzw. genutzt, beispielsweise zum Abrufen der Inhalte eines Containers bzw. einer Containerdatei seitens einer Datenbank.

Bei dem erfindungsgemäßen Verfahren ist vorteilhafterweise vorgesehen, dass der virtuelle, dreidimensionale Darstellungsraum eines Containers, insbesondere Medien-Containers, zur Wiedergabe von Informationen, insbesondere Medieninhalten seitens wenigstens eines Endgerätes eine auswählbare Form und vorzugsweise vorgebbare bzw. einstellbare Dimensionen bzw. Abmessungen in Bezug auf einen Raum in der realen physischen Welt aufweist, und seitens des wenigstens einen Endgerätes wenigstens eines Nutzers mit den entsprechenden Dimensionen bzw. Abmessungen der realen physischen Welt darstellbar ist bzw. dargestellt wird.

Bei dem erfindungsgemäßen Verfahren ist vorteilhafterweise vorgesehen, dass die Dimensionen bzw. Abmessungen eines virtuellen, dreidimensionalen Darstellungsraums eines Containers, insbesondere Medien-Containers, veränderbar, insbesondere skalierbar sind.

Bei dem erfindungsgemäßen Verfahren ist vorteilhafterweise vorgesehen, dass die virtuellen, dreidimensionalen Darstellungsräume von Containern, insbesondere Medien-Containern, voneinander mit einem vorzugsweise vorgebbaren bzw. einstellbaren Abstand der realen, physischen Welt zuordbar bzw. zugeordnet werden.

Bei dem erfindungsgemäßen Verfahren ist vorteilhafterweise vorgesehen, dass die virtuellen, dreidimensionalen Darstellungsräume von wenigstens zwei Containern, insbesondere Medien-Containern, miteinander kombinierbar sind bzw. kombiniert werden.

Bei dem erfindungsgemäßen Verfahren ist vorteilhafterweise vorgesehen, dass ein virtueller, dreidimensionaler Darstellungsraum eines Containers, insbesondere Medien-Containers, hinsichtlich seiner Lage und/oder Ausrichtung, insbesondere bezogen auf seine Zuordnung in der realen physischen Welt, veränderbar ist bzw. verändert wird, vorzugsweise rotierbar bzw. verschwenkbar ist bzw. rotiert bzw. verschwenkt wird, insbesondere mittels georeferenzierter Daten (Geodaten), vorzugsweise mittels raumbezogener Anker.

Bei dem erfindungsgemäßen Verfahren ist vorteilhafterweise vorgesehen, dass wenigstens ein virtueller, dreidimensionaler Darstellungsraum eines Containers, insbesondere Medien-Containers, mittels einer Blockkette (Blockchain) abgesichert wird, vorzugsweise im Hinblick auf ein Erstellen, Veröffentlichen, Kommentieren, Annotieren, Weiterleiten und/oder Abonnieren von Informationen, insbesondere Medieninhalten, des Containers, im Hinblick auf eine Veräußerung oder Vermietung des Containers und/oder im Hinblick auf eine Veränderung des virtuellen, dreidimensionalen Darstellungsraums und/oder der in diesem wiedergebaren bzw. wiederzugebenden Informationen, insbesondere Medieninhalte.

Bei dem erfindungsgemäßen Verfahren ist vorteilhafterweise vorgesehen, dass für eine computergestützte Erweiterung der Realitätswahrnehmung mittels wenigstens einem Endgerät, insbesondere eine virtuelle Realität (Virtual Reality (VR)) und/oder eine erweiterte Realität (Augmented Reality (AR)) durch Darstellung von virtuellen, vorzugsweise dreidimensionalen Medieninhalten, besonders bevorzugt in Echtzeit, seitens des wenigstens einen Endgerätes, vorzugsweise eine Erfassung der einen Nutzer bzw. das von ihm dabei genutzte Endgerät umgebenden physischen Welt, insbesondere in Echtzeit, vorzugsweise umfassend
- ein Ermitteln von Objekten, Größenverhältnissen, Anordnungsmustern und/oder Flächen in der umgebenden physischen Welt,
- eine Bewegungsverfolgung (Tracking) von Objekten,
- eine Analyse von Licht- und/oder Schattenquellen von Objekten,
   und/oder
- eine Anordnung bzw. Platzierung wenigstens eines virtuellen Objektes in dem virtuellen, dreidimensionalen Darstellungsraum des Containers, insbesondere Mediencontainers, die vorzugsweise unter Einsatz einer Augmented Reality-Programmierschnittstelle umgesetzt wird.

Auch bei dem erfindungsgemäßen Verfahren ist vorteilhafterweise vorgesehen, dass als Medieninhalte (M) vorgesehen sind: Text, Audio, Bild, Foto, und/oder Video, insbesondere sogenannte Videos im Kurzformat, Animation, dreidimensionale Animation (3D-Animation) und/oder dreidimensionales Modell (3D-Modell).

Bei dem erfindungsgemäßen Verfahren ist in einer bevorzugten Ausgestaltung der Erfindung vorteilhafterweise auch vorgesehen, dass der virtuelle, dreidimensionale Darstellungsraum des Containers, insbesondere Medien-Containers, ein Würfel ist, vorzugsweise mit den Abmessungen bzw. Dimensionen von Länge-Breite-Höhe mit 2 Meter mal 2 Meter mal 2 Meter bezogen auf die reale, physische Welt, wobei vorzugsweise der Mittelpunkt des Würfels den Ankerpunkt des raumbezogener Ankers in der realen, physischen Welt bildet, welcher besonders vorzugsweise ein bezogen auf die reale physische Welt zumindest hinsichtlich der Höhenlage nivellierter Terrainanker ist.

Bei dem erfindungsgemäßen Verfahren ist in einer weiteren bevorzugten Ausgestaltung der Erfindung vorteilhafterweise auch vorgesehen, dass der virtuelle, dreidimensionale Darstellungsraum des Containers, insbesondere Medien-Containers, vorzugsweise für Informationen, insbesondere Medieninhalte, mit wenigstens einer weiteren Dimension versehbar ist bzw. versehen wird, welche vorzugsweise ein zeitlicher Parameter und/oder ein Entwicklungsparameter ist.

Gegenstand der vorliegenden Erfindung ist ferner eine Schnittstelle zur Programmierung von Anwendungen (Anwendungsprogrammierschnittstelle (API: Application Programming Interface)) zur Anbindung an und/oder Integration in ein System bzw. eine Plattform, insbesondere in ein erfindungsgemäßes System bzw. eine erfindungsgemäße Plattform, zum wechselseitigen Austausch von Informationen, insbesondere Medieninhalten, zwischen Nutzern des Systems bzw. der Plattform über ein Kommunikationsnetzwerk, insbesondere das Internet, insbesondere zum Erstellen, Veröffentlichen, Kommentieren, Annotieren, Weiterleiten und/oder Abonnieren von Informationen, insbesondere Medieninhalten, mittels wenigstens eines vom jeweiligen Nutzer dazu eingesetzten Endgerätes, insbesondere Smartphone, Tablet, einer sogenannten XR-Brille und/oder dergleichen Endgerät, wobei die Informationen, insbesondere Medieninhalte, zumindest teilweise den Nutzern eine computergestützte Erweiterung der Realitätswahrnehmung mittels wenigstens einem Endgerät ermöglichen, insbesondere eine virtuelle Realität (Virtual Reality (VR)) und/oder eine erweiterte Realität (Augmented Reality (AR)) durch Darstellung von virtuellen, vorzugsweise dreidimensionalen Medieninhalten, besonders bevorzugt in Echtzeit, seitens des wenigstens einen Endgerätes, wobei Container, insbesondere Medien-Container, für seitens wenigstens eines Endgerätes wiedergebbare Informationen, insbesondere Medieninhalte, vorgesehen sind, die von wenigstens einem Nutzer mit wenigstens einem Endgerät zum Erstellen, Veröffentlichen, Kommentieren, Annotieren, Weiterleiten und/oder Abonnieren von Informationen, insbesondere Medieninhalten, nutzbar sind bzw. genutzt werden, wobei die seitens wenigstens eines Endgerätes wiedergebbaren Informationen, insbesondere Medieninhalte, eines Containers, insbesondere Medien-Containers, seitens des Endgerätes wenigstens eines Nutzers in einem vom Container, insbesondere Medien-Container, bereitgestellten virtuellen, dreidimensionalem Darstellungsraum wiedergebbar sind bzw. wiedergegeben werden, und der virtuelle, dreidimensionale Darstellungsraum mittels georeferenzierten Daten (Geodaten), vorzugsweise mittels raumbezogener Anker, einem Raum in der realen, physischen Welt zuordbar ist bzw. zugeordnet ist.

Bei der erfindungsgemäßen Schnittstelle ist vorteilhafterweise vorgesehen, dass die Zuordnung eindeutig, vorzugsweise eineindeutig, ist, insbesondere derart, dass ein virtueller, dreidimensionaler Darstellungsraum genau einem entsprechenden georeferenziertem Raum in der realen, physischen Welt zuordbar ist bzw. zugeordnet ist, bzw. umgekehrt einem georeferenziertem Raum in der realen, physischen Welt genau ein virtueller, dreidimensionaler Darstellungsraum zuordbar ist bzw. zugeordnet ist.

Bei der erfindungsgemäßen Schnittstelle ist vorteilhafterweise vorgesehen, dass die seitens wenigstens eines Endgerätes wiedergebbaren Informationen, insbesondere Medieninhalte, eines Containers, insbesondere Medien-Containers, seitens des Endgerätes eines Nutzers in dem virtuellen, dreidimensionalem Darstellungsraum wiedergebbar sind bzw. wiedergegeben werden, wenn der Nutzer mit seinem Endgerät
- sich an oder in dem Raum in der realen, physischen Welt befindet,
- sich mit einem vorzugsweise vorgebbaren und/oder einstellbaren Abstand, insbesondere Mindestabstand, zu dem Raum in der realen, physischen Welt befindet,
   und/oder
- den Raum in der realen, physischen Welt mittels bzw. über eine virtuelle Darstellung der physischen Welt, insbesondere eine digitale Karte räumlicher Daten, in der raumbezogene Gegenstände, insbesondere auch Videos oder Fotos, beispielsweise von einem Gebäude, Fahrzeuge, Personen, Sachverhalte und/oder Prozesse maßstäblich generalisiert und graphisch in ihren Raumbeziehungen, vorzugsweise in Echtzeit, darstellbar sind bzw. dargestellt sind, auswählt bzw. anwählt.

Eine besonders bevorzugte Ausgestaltung der Erfindung sieht vor, dass der raumbezogene Anker eines virtuellen, dreidimensionalen Darstellungsraums eines Containers als Verknüpfung bzw. elektronischer Verweis, sogenannter Link, auf den Container nutzbar ist bzw. genutzt wird, beispielsweise zum Abrufen der Inhalte eines Containers bzw. einer Containerdatei seitens einer Datenbank.

Bei der erfindungsgemäßen Schnittstelle ist vorteilhafterweise vorgesehen, dass die seitens wenigstens eines Endgerätes in einem virtuellen, dreidimensionalem Darstellungsraum eines Containers, insbesondere Medien-Containers, wiedergebbaren Informationen, insbesondere Medieninhalte, zumindest teilweise von einem Container auf wenigstens einen anderen Container übertragbar sind bzw. übertragen werden, insbesondere in wenigstens einen anderen Container kopierbar sind bzw. kopiert werden, vorzugsweise wenn der Nutzer mit seinem Endgerät
- sich an oder in dem Raum in der realen, physischen Welt befindet,
- sich mit einem vorzugsweise vorgebbaren und/oder einstellbaren Abstand, insbesondere Mindestabstand, zu dem Raum in der realen, physischen Welt befindet,
   und/oder
- den Raum in der realen, physischen Welt mittels bzw. über eine virtuelle Darstellung der physischen Welt, insbesondere eine digitale Karte räumlicher Daten, in der raumbezogene Gegenstände, insbesondere auch Videos oder Fotos, beispielsweise von einem Gebäude, Fahrzeuge, Personen, Sachverhalte und/oder Prozesse maßstäblich generalisiert und graphisch in ihren Raumbeziehungen, vorzugsweise in Echtzeit, darstellbar sind bzw. dargestellt sind, auswählt bzw. anwählt.

Vorteilhafterweise ist bzw. wird der raumbezogene Anker eines virtuellen, dreidimensionalen Darstellungsraums eines Containers als Verknüpfung bzw. elektronischer Verweis, sogenannter Link, auf den Container nutzbar bzw. genutzt, beispielsweise zum Abrufen der Inhalte eines Containers bzw. einer Containerdatei seitens einer Datenbank.

Bei der erfindungsgemäßen Schnittstelle ist vorteilhafterweise auch vorgesehen, dass der virtuelle, dreidimensionale Darstellungsraum eines Containers, insbesondere Medien-Containers, zur Wiedergabe von Informationen, insbesondere Medieninhalten seitens wenigstens eines Endgerätes eine auswählbare Form und vorzugsweise vorgebbare bzw. einstellbare Dimensionen bzw. Abmessungen in Bezug auf einen Raum in der realen physischen Welt aufweist, und seitens des wenigstens einen Endgerätes wenigstens eines Nutzers mit den entsprechenden Dimensionen bzw. Abmessungen der realen physischen Welt darstellbar ist bzw. dargestellt wird.

Vorteilhafterweise sind bei der erfindungsgemäßen Schnittstelle die Dimensionen bzw. Abmessungen eines virtuellen, dreidimensionalen Darstellungsraums eines Containers, insbesondere Medien-Containers, veränderbar, insbesondere skalierbar.

Eine weitere Ausgestaltung der erfindungsgemäßen Schnittstelle sieht vor, dass die virtuellen, dreidimensionalen Darstellungsräume von Containern, insbesondere Medien-Containern, voneinander mit einem vorzugsweise vorgebbaren bzw. einstellbaren Abstand der realen, physischen Welt zuordbar bzw. zugeordnet sind.

Eine weitere Ausgestaltung der erfindungsgemäßen Schnittstelle sieht vor, dass die virtuellen, dreidimensionalen Darstellungsräume von wenigstens zwei Containern, insbesondere Medien-Containern, miteinander kombinierbar sind.

Eine weitere Ausgestaltung der erfindungsgemäßen Schnittstelle sieht vor, dass ein virtueller, dreidimensionaler Darstellungsraum eines Containers, insbesondere Medien-Containers, hinsichtlich seiner Lage und/oder Ausrichtung, insbesondere bezogen auf seine Zuordnung in der realen physischen Welt, veränderbar ist, vorzugsweise rotierbar bzw. verschwenkbar ist, insbesondere mittels georeferenzierter Daten (Geodaten), vorzugsweise mittels raumbezogener Anker.

Eine besonders vorteilhafte Ausgestaltung der erfindungsgemäßen Schnittstelle sieht vor, dass wenigstens ein virtueller, dreidimensionaler Darstellungsraum eines Containers, insbesondere Medien-Containers, mittels einer Blockkette (Blockchain) abgesichert ist, vorzugsweise im Hinblick auf ein Erstellen, Veröffentlichen, Kommentieren, Annotieren, Weiterleiten und/oder Abonnieren von Informationen, insbesondere Medieninhalten, des Containers im Hinblick auf eine Veräußerung oder Vermietung des Containers und/oder im Hinblick auf eine Veränderung des virtuellen, dreidimensionalen Darstellungsraums und/oder der in diesem wiedergebaren bzw. wiederzugebenden Informationen, insbesondere Medieninhalte.

Die erfindungsgemäße Schnittstelle weist vorteilhafterweise eine Augmented Reality-Programmierschnittstelle auf bzw. ist vorteilhafterweise mit einer solchen Augmented Reality-Programmierschnittstelle verbindbar, wobei die Augmented Reality-Programmierschnittstelle vorzugsweise Mittel zur Erfassung der einen Nutzer bzw. das von ihm dabei genutzte Endgerät umgebenden physischen Welt, insbesondere in Echtzeit, umfasst, vorzugsweise umfassend
- ein Ermitteln von Objekten, Größenverhältnissen, Anordnungsmustern und/oder Flächen in der umgebenden physischen Welt,
- Mittel zur Bewegungsverfolgung (Tracking) von Objekten,
- Mittel zur Analyse von Licht- und/oder Schattenquellen von Objekten,
   und/oder
- Mittel zur Anordnung bzw. Platzierung wenigstens eines virtuellen Objektes in dem virtuellen, dreidimensionalen Darstellungsraum des Containers, insbesondere Mediencontainers.

Die erfindungsgemäße Schnittstelle sieht als Medieninhalte vor: Text, Audio, Bild, Foto, und/oder Video, insbesondere sogenannte Videos im Kurzformat, Animation, dreidimensionale Animation (3D-Animation) und/oder dreidimensionales Modell (3D-Modell).

Eine weitere bevorzugte Ausgestaltung der erfindungsgemäßen Schnittstelle sieht vor, dass der virtuelle, dreidimensionale Darstellungsraum des Containers, insbesondere Medien-Containers, ein Würfel ist, vorzugsweise mit den Abmessungen bzw. Dimensionen von Länge-Breite-Höhe mit 2 Meter mal 2 Meter mal 2 Meter bezogen auf die reale, physische Welt, wobei vorzugsweise der Mittelpunkt des Würfels den Ankerpunkt des raumbezogener Ankers in der realen, physischen Welt bildet, welcher besonders vorzugsweise ein bezogen auf die reale physische Welt zumindest hinsichtlich der Höhenlage nivellierter Terrainanker ist.

Eine weitere vorteilhafte Ausgestaltung der erfindungsgemäßen Schnittstelle sieht vor, dass der virtuelle, dreidimensionale Darstellungsraum des Containers, insbesondere Medien-Containers, vorzugsweise für Informationen, insbesondere Medieninhalte, mit wenigstens einer weiteren Dimension versehbar ist bzw. versehen ist, welche vorzugsweise ein zeitlicher Parameter und/oder ein Entwicklungsparameter ist.

Eine bevorzugte Ausgestaltung der Erfindung sieht vor, dass das erfindungsgemäße System bzw. die erfindungsgemäße Plattform oder die erfindungsgemäße Schnittstelle auf bzw. unter Android der Open Handset Alliance, einem Betriebssystem als auch eine Softwareplattform für mobile Geräte wie Smartphones, Tabletcomputer, Fernseher, Mediaplayer, Netbooks und/oder Autos, und/oder unter iOS der Apple Inc. verfügbar bzw. betreibbar ist.

Weitere Einzelheiten, Merkmale und Vorteile der Erfindung werden nachfolgend anhand der in den Figuren der Zeichnung dargestellten Ausführungsbeispiele näher erläutert. Dabei zeigen:
- Fig. 1: in einer schematisch perspektivischen Ansicht eine Darstellung eines prinzipiellen Ausführungsbeispiels einer erfindungsgemäßen Plattform;
- Fig. 2: in einer schematisch perspektivischen Ansicht eine Darstellung eines weiteren prinzipiellen Ausführungsbeispiels einer erfindungsgemäßen Plattform, vorliegend mit einer XR-Brille als Endgerät eines Nutzers der Plattform;
- Fig. 3: in einer schematisch perspektivischen Ansicht eine Darstellung eines weiteren prinzipiellen Ausführungsbeispiels einer erfindungsgemäßen Plattform, vorliegend mit einem Smartphone als Endgerät eines Nutzers der Plattform;
- Fig.4: zeigt den Anwendungsfall einer erfindungsgemäßen Plattform für Sehenswürdigkeiten, Straßenzüge oder Bezirke in einer insbesondere historischen oder zukünftig geplanten Variante, insbesondere auch für Bildungs- und/oder Unterrichtszwecke, beispielsweise Geschichtsunterricht;
- Fig. 5: den Anwendungsfall einer erfindungsgemäßen Plattform für Museen oder dergleichen Einrichtungen, insbesondere zur Präsentation von virtuellen Ausstellungstücken;
- Fig.6: zeigt den Anwendungsfall einer erfindungsgemäßen Plattform als sogenannter Showroom für virtuelle Inhalte, beispielsweise für Automobile;
- Fig. 7: zeigt ein Beispiel eines von einem Container einer erfindungsgemäßen Plattform bereitstellbaren virtuellen, dreidimensionalen Raums mit Medieninhalt, vorliegend eine Sehenswürdigkeit bzw. ein dreidimensionales Modell derselben, insbesondere auch für Bildungs- und/oder Unterrichtszwecke;
- Fig. 8: den Anwendungsfall einer erfindungsgemäßen Plattform für Tourismus- bzw. Touristikverwendungen, beispielsweise für Städte, zur Präsentation von virtuellen Sehenswürdigkeiten oder dergleichen;
- Fig. 9: zeigt ein Beispiel eines von einem Container einer erfindungsgemäßen Plattform bereitstellbaren virtuellen, dreidimensionalen Raums mit Medieninhalt, vorliegend für Museen, Schulen oder dergleichen Einrichtungen, insbesondere zur Präsentation von virtuellen Ausstellungstücken oder Modellen oder Kunst; und
- Fig. 10: zeigt den Anwendungsfall einer erfindungsgemäßen Plattform für historische Städteführer, insbesondere mittels Avataren historischer Persönlichkeiten oder dergleichen.

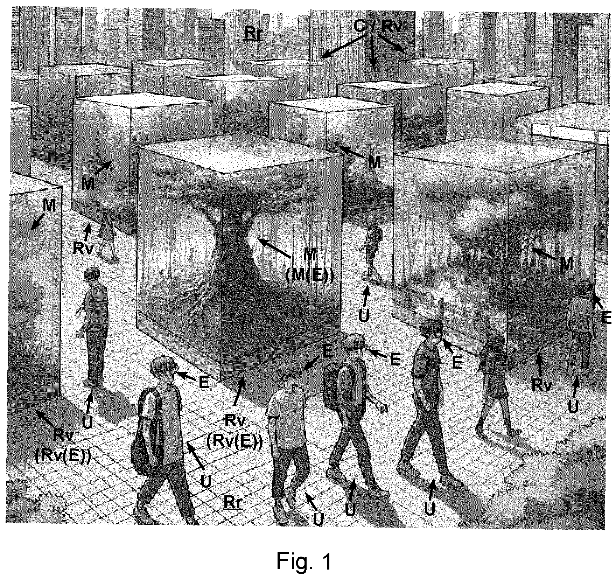

Fig. 1 zeigt in einer schematisch perspektivischen Ansicht eine Darstellung eines prinzipiellen Ausführungsbeispiels einer erfindungsgemäßen Plattform zum wechselseitigen Austausch von Informationen, insbesondere Medieninhalten M, zwischen Nutzern U der Plattform über ein Kommunikationsnetzwerk, insbesondere dem Internet. Die Plattform erlaubt Nutzern U insbesondere ein Erstellen, Veröffentlichen, Kommentieren, Annotieren, Weiterleiten und/oder Abonnieren von Informationen, insbesondere Medieninhalten, mittels wenigstens eines vom jeweiligen Nutzer U dazu eingesetzten Endgerätes E, insbesondere Smartphone, Tablet, einer sogenannten XR-Brille (XR: Extended Reality) und/oder dergleichen Endgerät E.

Die Informationen, insbesondere Medieninhalte M, ermöglichen Nutzern U der Plattform mittels wenigstens eines ihres Endgerätes E zumindest teilweise eine computergestützte Erweiterung der Realitätswahrnehmung, insbesondere eine virtuelle Realität (Virtual Reality (VR)) und/oder eine erweiterte Realität (Augmented Reality (AR)) durch Darstellung von virtuellen, vorzugsweise dreidimensionalen Medieninhalten M, besonders bevorzugt in Echtzeit, seitens des wenigstens einen Endgerätes E. Dabei kommen insbesondere virtuelle, vorzugsweise dreidimensionale Medieninhalte M zur Verwendung, insbesondere Text, Audio, Bild, Foto, und/oder Video, insbesondere sogenannte Videos im Kurzformat, Animationen, dreidimensionale Animationen (3D-Animationen) und/oder dreidimensionale Modelle (3D-Modelle). In Fig. 1 sind beispielhaft dreidimensionale Waldflächen mit Bäumen als Medieninhalt M dargestellt. Für die Informationen, insbesondere Medieninhalte M stellt ein Container C, insbesondere Medien-Container C, seitens des Endgerätes E wenigstens eines Nutzers U einen virtuellen, dreidimensionalem Darstellungsraum Rv bereit, in dem die Informationen, insbesondere Medieninhalte wiedergebbar sind bzw. wiedergegeben werden. Dabei ist der virtuelle, dreidimensionale Darstellungsraum Rv mittels georeferenzierten Daten (Geodaten), vorzugsweise mittels raumbezogener Anker, einem Raum Rr in der realen, physischen Welt zuordbar bzw. zugeordnet. Der virtuelle, dreidimensionale Darstellungsraum Rv eines Containers ist so von wenigstens einem Nutzer U der Plattform mit wenigstens einem Endgerät E zum Erstellen, Veröffentlichen, Kommentieren, Annotieren, Weiterleiten und/oder Abonnieren von Informationen, insbesondere Medieninhalten, nutzbar. Ein virtueller, dreidimensionaler Darstellungsraum Rv ist genau einem entsprechenden georeferenziertem Raum Rr in der realen, physischen Welt zuordbar bzw. zugeordnet, bzw. umgekehrt einem georeferenziertem Raum Rr in der realen, physischen Welt ist genau ein virtueller, dreidimensionaler Darstellungsraum Rv zuordbar bzw. zugeordnet.

Die virtuellen, dreidimensionalen Darstellungsräume Rv der Container C sind in Fig. 1 Würfel, deren virtuellen Wände in ihrer Darstellung seitens eines Endgerätes E vorteilhafterweise aus einem gläsernen Material zu bestehen scheinen. Andere Gestaltungsformen sind aber ebenfalls erfindungsgemäß vorgesehen. Die in Fig. 1 beispielhaft dargestellten virtuellen, dreidimensionalen Darstellungsräume Rv eines Containers C für Informationen, insbesondere Medieninhalte M, sind Würfel, vorzugsweise mit den Abmessungen bzw. Dimensionen von Länge-Breite-Höhe mit 2 Meter mal 2 Meter mal 2 Meter bezogen auf die reale, physische Welt. Der Mittelpunkt der jeweiligen Würfels bildet vorzugsweise den Ankerpunkt des raumbezogener Ankers eines insbesondere entsprechenden Raums Rr der realen, physischen Welt, welcher besonders vorzugsweise ein bezogen auf die reale physische Welt zumindest hinsichtlich der Höhenlage nivellierter Terrainanker ist. Die Dimensionen bzw. Abmessungen eines virtuellen, dreidimensionalen Darstellungsraums Rv sind vorteilhafterweise veränderbar, insbesondere skalierbar, beispielsweise den Dimensionen bzw. Abmessungen des Raums Rr der realen, physischen Welt in der Darstellung entsprechend.

Der virtuelle, dreidimensionale Darstellungsraum Rv eines Container C ist mittels georeferenzierten Daten (Geodaten), vorzugsweise mittels raumbezogener Anker, der realen, physischen Welt zuordbar bzw. zugeordnet, beispielsweise aber nicht beschränkend mittels Funkzelleninformationen der Funkzellen eines Mobilfunknetzes eines Mobilfunknetzbetreibers, die ebenfalls georeferenzierte Daten (Geodaten) im Sinne der vorliegenden Erfindung sind. Mobilfunknetzbetreiber können so Nutzer des Mobilfunknetzes beispielsweise hinsichtlich ihrer Position in der realen, physischen Welt lokalisieren bzw. orten. Eine weitere verbesserte Ortung bzw. Positionsbestimmung ist insbesondere WLAN-basiert vorgesehen.

In Fig. 1 ist die reale Welt Rr symbolisch und graphisch dargestellt, mit einer Erdoberfläche mit Gebäuden im Hintergrund, auf der Erdoberfläche umherlaufenden Nutzern U mit Endgeräten E. Die mittels raumbezogener Anker, der realen, physischen Welt zugeordneten bzw. zuordbaren virtuellen, dreidimensionalen Darstellungsräume Rv der Container C, welche Nutzer U mit ihrem Endgerät E bzw. seitens ihres Endgerätes E insbesondere betrachten oder vergleichbar erfahren können, sind in Fig. 1 ebenfalls dargestellt, insbesondere zur Verdeutlichung der Erfindung. In Fig. 1 sind insbesondere Container C mit einem virtuellen, dreidimensionalen Darstellungsraum Rv vorgesehen, welche als Würfel voneinander mit einem vorzugsweise vorgebbaren Abstand einem entsprechenden Raum Rr der realen, physischen Welt zuordbar bzw. zugeordnet sind. Erfindungsgemäß ist ein virtueller, dreidimensionaler Darstellungsraum Rv eines Containers C hinsichtlich seiner dargestellten Lage und/oder Ausrichtung, insbesondere bezogen auf seine Zuordnung in der realen physischen Welt, veränderbar, vorzugsweise rotierbar bzw. verschwenkbar, insbesondere mittels georeferenzierter Daten (Geodaten), vorzugsweise mittels raumbezogener Anker.

Die in einem virtuellen, dreidimensionalem Darstellungsraum Rv eines Containers C vorhandenen Informationen, insbesondere Medieninhalte M, sind bzw. werden seitens wenigstens eines Endgerätes E wenigstens eines Nutzers U wiedergebbar bzw. wiedergegeben, wenn der Nutzer U mit seinem Endgerät E
- sich an oder in dem Raum Rr in der realen, physischen Welt befindet,
- sich mit einem vorzugsweise vorgebbaren und/oder einstellbaren Abstand, insbesondere Mindestabstand, zu dem Raum Rr in der realen, physischen Welt befindet,
   und/oder
- den Raum Rr in der realen, physischen Welt mittels bzw. über eine virtuelle Darstellung der physischen Welt, insbesondere eine digitale Karte räumlicher Daten, in der raumbezogene Gegenstände, Fahrzeuge, Personen, Sachverhalte und/oder Prozesse maßstäblich generalisiert und graphisch in ihren Raumbeziehungen, vorzugsweise in Echtzeit, darstellbar sind bzw. dargestellt sind, auswählt bzw. anwählt.

Dazu wird insbesondere ein Triggersingal verwendet, welches bei entsprechender Position des Nutzers U in der realen, physischen Welt dem Nutzer U das Vorhandensein eines virtuellen, dreidimensionalen Darstellungsraums Rv eines Containers C, vorzugsweise eines ihn interessierenden Containers C, in seiner unmittelbaren Umgebung seitens seines Endgerätes signalisiert, welchen der Nutzer U dann zur weiteren Nutzung aus- bzw. anwählen kann.

In einer digitalen Karte ist der raumbezogene Anker eines virtuellen, dreidimensionalen Darstellungsraums Rv eines Containers C insbesondere als Verknüpfung bzw. elektronischer Verweis, sogenannter Link, auf den Container C nutzbar, beispielsweise zum Abrufen der Inhalte eines Containers C bzw. einer Containerdatei seitens einer Datenbank. Das erfindungsgemäße Abrufen der Inhalte eines Containers C erfolgt vorzugsweise über das Internet als Kommunikationsnetzwerk.

Nutzer U der Plattform können Informationsinhalte, insbesondere Medieninhalte M, eines virtuellen, dreidimensionalen Darstellungsraums Rv eines Containers C, zumindest teilweise von einem Container C auf wenigstens einen anderen Container C übertragen, insbesondere in wenigstens einen anderen Container C kopieren. Dies ist insbesondere vorgesehen, wenn sich ein Nutzer U mit seinem Endgerät E an dem Ort oder in einem vorzugsweise vorgebbaren Bereich des Ortes oder Raums Rr der realen physischen Welt befindet, der den dem virtuellen, dreidimensionalen Darstellungsraum Rv des Containers C zugeordneten georeferenzierten Daten (Geodaten) der realen physischen Welt entspricht.

Alternativ und/oder ergänzend können Nutzer U der Plattform Informationsinhalte, insbesondere Medieninhalte M, eines virtuellen, dreidimensionalen Containers C, zumindest teilweise auf wenigstens ein Endgerät E eines Nutzers U, beispielsweise auch an sich selbst, übertragen, insbesondere kopieren, wenn der Nutzer mit seinem Endgerät E über die Plattform einen georeferenzierten Container C über eine virtuelle Darstellung der physischen Welt, insbesondere eine digitale Karte räumlicher Daten, in der raumbezogene Gegenstände, Sachverhalte und/oder Prozesse maßstäblich generalisiert und graphisch in ihren Raumbeziehungen darstellbar sind bzw. dargestellt sind, auswählt bzw. anwählt.

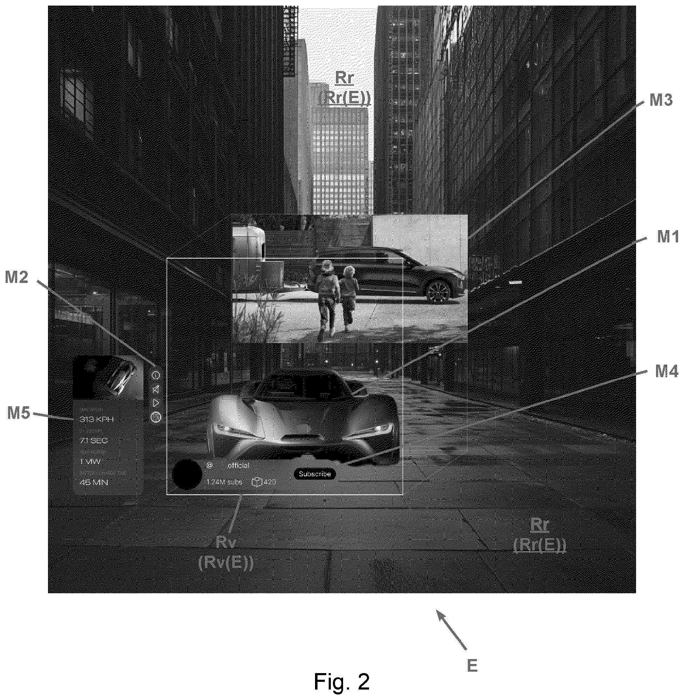

Fig. 2 zeigt in einer schematisch perspektivischen Ansicht eine Darstellung eines weiteren prinzipiellen Ausführungsbeispiels einer erfindungsgemäßen Plattform, vorliegend mit einer XR-Brille als Endgerät E eines Nutzers U einer erfindungsgemäßen Plattform. Wie bei dem Ausführungsbeispiel einer Plattform nach Fig. 1 sind bei dem Ausführungsbeispiel einer Plattform nach Fig. 2 Container C vorgesehen, die virtuelle, dreidimensionale Darstellungsräume Rv in Form von Würfeln seitens der XR-Brille als Endgerät E eines Nutzers U wiedergeben. Fig. 2 zeigt einen solchen Würfel als virtuellen, dreidimensionalen Darstellungsraum Rv. Die virtuellen Wände des Würfels erscheinen in ihrer Darstellung seitens des Endgeräts E aus einem gläsernen Material zu bestehen. Die virtuellen Wände des als Würfel ausgebildeten virtuellen, dreidimensionalen Darstellungsraums Rv weisen vorliegend vorteilhafterweise unterschiedliche Möglichkeiten für Medieninhalte M, insbesondere M1, M2, M3, M4 und M5 auf. So wird als dreidimensionaler Inhalt M1 auf dem Boden des Würfels eine dreidimensionale Abbildung bzw. ein dreidimensionales Modell eines Objektes dargestellt, vorliegend ein Kraftfahrzeug, welches mit bzw. über ein virtuell neben dem virtuellen, dreidimensionalen Darstellungsraum Rv des Containers C dem Nutzer U als Medieninhalt M2 angezeigtes Menü (Container-Menü bzw. Würfel-/Cube-Menü) hinsichtlich seiner dargestellten Lage seitens des Endgerätes E veränderbar ist, insbesondere drehbar oder schwenkbar. Ferner ist es erfindungsgemäß vorgesehen, dass Nutzer U über das Menü (Container-Menü) Veränderungen an der Darstellung der Medieninhalte M des Containers C, insbesondere des als Medieninhalt M1 vorgesehenen Objektes, vornehmen kann, beispielsweise ein Öffnen der Türen des Kraftfahrzeugs oder dergleichen. Auf der in Fig. 2 rückliegenden Wand des Würfels ist vorliegend als Medieninhalt M3 eine für Bild, Foto und/oder Video geeignete Anzeige vorgesehen. Im Beispiel des Kraftfahrzeugs als Medieninhalt M1 beispielsweise ein Video des Herstellers bezogen auf das dreidimensional dargestellte Kraftfahrzeug. Desweiteren werden dem Nutzer U bei dem in Fig. 2 dargestellten Ausführungsbeispiel ergänzende Informationen zu dem Medieninhalt M1 Verfügung gestellt, vorliegend insbesondere Informationen M4 zum Ersteller (Creator) der Medieninhalte M1, M2, M3, M3, M5 des Containers C, insbesondere mittels eines sogenannten Info Panels, als auch spezifischere Informationen bzw. Detailinformationen M5 zu dem Medieninhalt M1. Das Menü M2, die Informationen M4 zum Ersteller (Creator) des Medieninhalts M1, als auch spezifischere Informationen bzw. Detailinformationen M5 zu dem Medieninhalt M1, erlauben dem Nutzer U vorteilhafterweise insbesondere folgende Interaktionen mit dem Medieninhalten M1, M2, M3, M4 und/oder M5 des Containers C: Video abspiele/pausieren; Audio aktivieren/deaktivieren; Infopanel einblenden/ausblenden; Kommentieren; Liken; skalieren und/oder verändert platzieren.

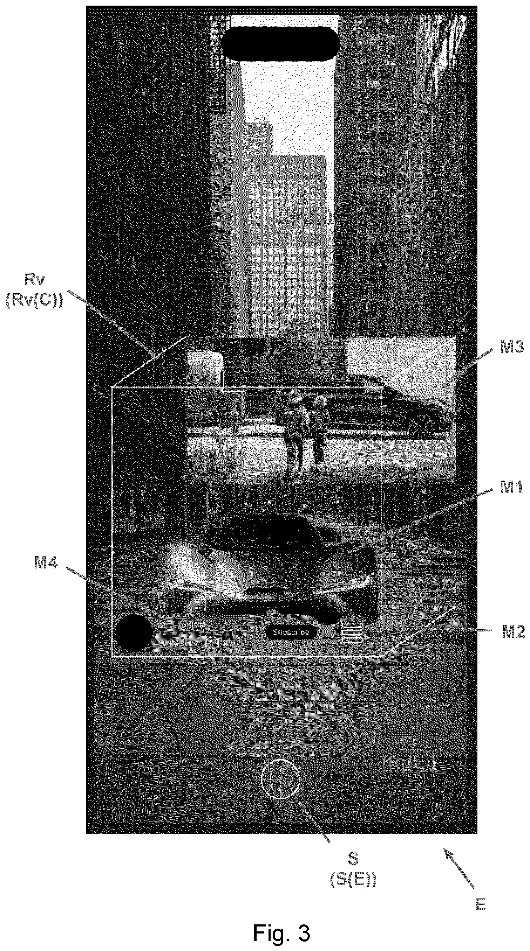

Das Ausführungsbeispiel nach Fig. 3 unterscheidet sich von dem Ausführungsbeispiel nach Fig. 2 durch das Endgerät E des Nutzers U. Statt einer XR-Brille als Endgerät E des Nutzers U, wie bei dem Ausführungsbeispiel nach Fig. 2 gegeben, ist bei dem Ausführungsbeispiel nach Fig. 3 das Endgerät E des Nutzers U ein Smartphone.

Erfindungsgemäß ist vorteilhafterweise, wie beispielsweise bei den Ausführungsbeispielen nach Fig.1, Fig. 2 und/oder Fig. 3, insbesondere eine Social-Media-Plattform bereitgestellt, auf der Nutzer U virtuelle, dreidimensionale Darstellungsräume Rv, insbesondere in Form von Würfeln, erstellen und ansehen können, die in der realen Welt verankert sind und die in Augmented Reality und/oder Virtual Reality seitens wenigstens eines Endgerätes E wenigstens eines Nutzers U sichtbar sind. Die virtuellen, dreidimensionalen Darstellungsräume Rv, vorliegend in Form eines Würfels, können an ihrem ursprünglichen, in der realen Welt verankerten Standort betrachtet werden. Alternativ und/oder ergänzend kann der Nutzer U einen Anzeigemodus starten, in dem ein virtueller, dreidimensionaler Darstellungsraum Rv, vorliegend in Form eines Würfels, unabhängig vom aktuellen Standort vor ihm in der Darstellung seines Endgerätes E platziert wird. Im Anzeigemodus kann der Nutzer U vorteilhafterweise durch alle virtuellen, dreidimensionalen Darstellungsräume Rv, vorliegend in Form von Würfeln, der Container C der Plattform navigieren, insbesondere durch eine sogenannte Gestensteuerung, beispielsweise durch eine Wischbewegung oder dergleichen, ähnlich wie man insbesondere durch Bilder in einer Zeitleiste (Timeline) scrollt, wie beispielsweise bei Instagram. Benutzer bzw. Nutzer U der Plattform können virtuelle, dreidimensionale Darstellungsräume Rv, vorliegend in Form von Würfeln, insbesondere bewerten und/oder liken, den Ersteller abonnieren, Kommentare schreiben und/oder virtuelle Würfel kaufen und/oder Klone der Originalwürfel beispielsweise an ihrem Zuhause geographisch verankern.

Erfindungsgemäß erhält jeder Benutzer bzw. Nutzer U der Plattform vorteilhafterweise einen eigenen Bereich von beispielsweise zwei Quadratmetern, der in der realen Welt verankert ist und in dem sein Würfel platziert wird. Während eines Registrierungsprozesses kann der Benutzer vorteilhafterweise aus allen verfügbaren Orten in der realen Welt wählen. Die Plattform schlägt vorteilhafterweise einen anfänglichen Standort für den Würfel in der Nähe des vom Benutzer eingegebenen Standorts vor, der während der Registrierung angegeben wurde. Der Benutzer kann diesen Standort vorteilhafterweise anpassen, bis er beispielsweise seinen bevorzugten Platz oder Lieblingsplatz gefunden hat, und die Registrierung abschließen. Diese Plätze können vorteilhafterweise auch an andere Benutzer verkauft, getauscht oder beispielsweise vermietet werden. Vorteilhafterweise können beispielsweise Unternehmen Container, insbesondere Würfel, beispielsweise an den besten oder beliebten Standorten in Städten oder in der Nähe von Sehenswürdigkeiten und anderen interessanten Orten erwerben, kaufen oder mieten, um beispielsweise virtuelle Darstellungen ihrer Produkte zu platzieren, Veranstaltungen bzw. Events zu zeigen bzw. durchzuführen, virtuelle Shops zu errichten und/oder dergleichen. Vorteilhafterweise können Nutzer auch zusätzliche Container erwerben bzw. kaufen. Vorteilhafterweise basiert die Verankerung der Container in der realen, physischen Welt auf Karten bzw. Maps, insbesondere der Google Maps API oder der Apple Maps API (API: Application Programming Interface) oder dergleichen. Eine Ausgestaltungsvariante der Erfindung sieht vor, dass neu angelegte Container C bzw. die von denen bereitgestellten virtuellen, dreidimensionalen Darstellungsräume Rv, also neue Würfel, nicht näher als beispielsweise mit einem Abstand von mindestens zwei Meter an bzw. zu einem bereits bestehenden Würfel platziert bzw. positioniert werden können bzw. dürfen. Die virtuellen, dreidimensionalen Darstellungsräume Rv der Container C weisen zur Darstellung von Informationen, insbesondere Medieninhalten M, vorteilhafterweise vorgebbare Dimensionen bzw. Abmessungen auf, die seitens des wenigstens einen Endgerätes E wenigstens eines Nutzers U mit den entsprechenden skalierten Dimensionen bzw. Abmessungen des Raums Rr in der realen physischen Welt wiedergebbar sind bzw. wiedergegeben werden.

Die erfindungsgemäßen Würfel als Darstellungsraum Rv, haben insbesondere eine Größe von zwei mal zwei mal zwei Metern in Bezug auf die reale, physische Welt. Die virtuellen Wände der Würfel scheinen in ihrer Darstellung seitens eines Endgerätes E vorteilhafterweise aus einem gläsernen Material zu bestehen. Der Benutzer U kann den virtuellen, dreidimensionalen Darstellungsraum Rv, insbesondere Würfel, vorteilhafterweise betreten, was, beispielsweise wenn dies vom Ersteller gewünscht ist, insbesondere bei dem Nutzer ein Gefühl vermitteln kann, durch ein Portal zu gehen und beispielsweise eine neue Welt zu betreten.

Die Darstellungsräume Rv, insbesondere Würfel, enthalten erfindungsgemäß virtuelle Inhalte, die alles Mögliche darstellen können. Einige Beispiele für diese virtuellen Inhalte sind animierte Landschaften, wie insbesondere Wälder, Inseln, Berge oder dergleichen, Avatare, also künstliche Person oder grafische Stellvertreter einer echten Person, Haustiere, virtuelle Ladenflächen, in denen Benutzer beispielsweise Produkte erwerben bzw. kaufen können, ähnlich wie beispielsweise bei einem Online-Shopping, Showrooms, in denen Benutzer beispielsweise virtuelle Darstellungen von Autos, Kleidung oder dergleichen erleben oder insbesondere mithilfe eines Avatars beispielsweise anprobieren können, Büros, Wohnzimmer, alle Arten von dreidimensionaler Kunst (3D-Kunst) oder zweidimensionaler Kunst (2D-Kunst) oder sogar staatliche Dienstleistungen.

Vorteilhafterweise sind erfindungsgemäß verschiedene Möglichkeiten zur Erstellung von Inhalten vorgesehen, insbesondere:
- Eine einfache Methode für zweidimensionale Inhalte (2D-Content) ist das Aufnehmen von Fotos und/oder Videos oder das Verwenden vorhandener Bilder aus einer Gerätemediathek oder dergleichen Datenspeicher eines Endgerätes E eines Nutzers U, die dann auf die Plattform hochgeladen und im Container C, insbesondere dem von diesem seitens des Endgerätes E des Nutzers U bereitgestellten Darstellungsraum Rv (Würfel) angeordnet werden können.
- Eine weitere Möglichkeit besteht darin, bestehende dreidimensionale Inhalte (3D-Content) auf die Plattform hochzuladen, welche insbesondere mit einem 3D-Modellierungs- und/oder Animationsprogramm wie beispielsweise Blender der Blender Foundation oder Maya der Autodesk Inc., erstellbar sind.
- Alternativ und/oder ergänzend können Nutzer U der Plattform dreidimensionale Inhalte (3D-Inhalte) mit einem integrierten Erstellungswerkzeug erstellen, das insbesondere viele Vorlagen, dreidimensionale Objekte (3D-Objekte) und/oder andere nützliche Funktionen bietet bzw. bereithält.
- Ferner ist das Erstellen eines dreidimensionalen Scans (3D Scans) von physischen Gegenständen mit dem Endgerät E des Nutzers U, beispielsweise einem Smartphone, vorgesehen.
   und/oder
- Eine weitere vorteilhafte Möglichkeit ist die Anbindung an Plattformen, die dreidimensionale Objekte (3D-Objekte) kostenlos oder kostenpflichtig anbieten, wie beispielsweise sketchfab.com der Sketchfab Inc..

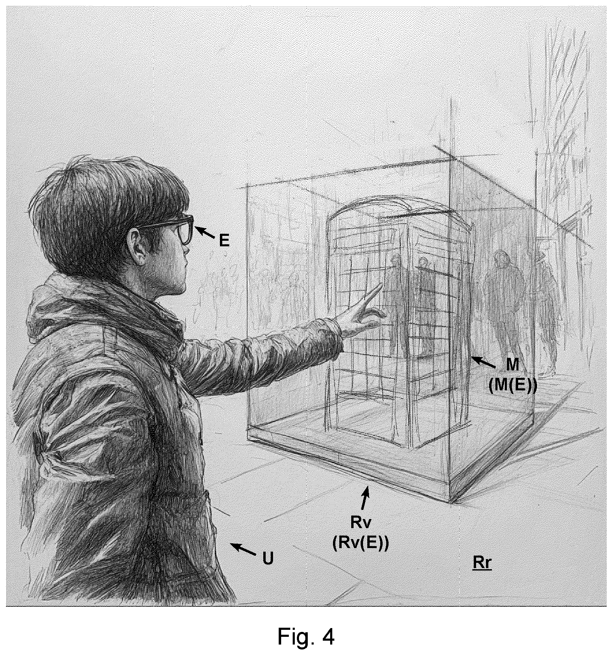

Die Fig. 4, Fig. 5, Fig. 6, Fig. 7, Fig. 8, Fig. 9 und Fig. 10 zeigen jeweils Ausführungsbeispiele für vorteilhafte bzw. bevorzugte Verwendungen bzw. Anwendungen (Use Cases) einer erfindungsgemäßen Plattform.

Fig. 4 zeigt den Anwendungsfall einer erfindungsgemäßen Plattform für Sehenswürdigkeiten, Straßenzüge oder Bezirke in einer insbesondere historischen oder zukünftig geplanten Variante, wobei insbesondere mit einer vierten Dimension der Darstellungsräume Rv der Container C insbesondere eine sogenannte virtuelle Zeitreise realisierbar ist. Eine solche virtuelle Zeitreise ist mittels der erfindungsgemäßen Darstellungsräume Rv der Container C, in denen beispielsweise historische Varianten eines Gebäudes als dreidimensionales, virtuelles Objekt als Medieninhalt M vorgesehen sind, durch Videomaterial, Audiomaterial und/oder sonstige historische Artefakte unterstütz- bzw. aufwertbar, beispielsweise auch für Bildungs- und/oder Unterrichtszwecke, beispielsweise Geschichtsunterricht.

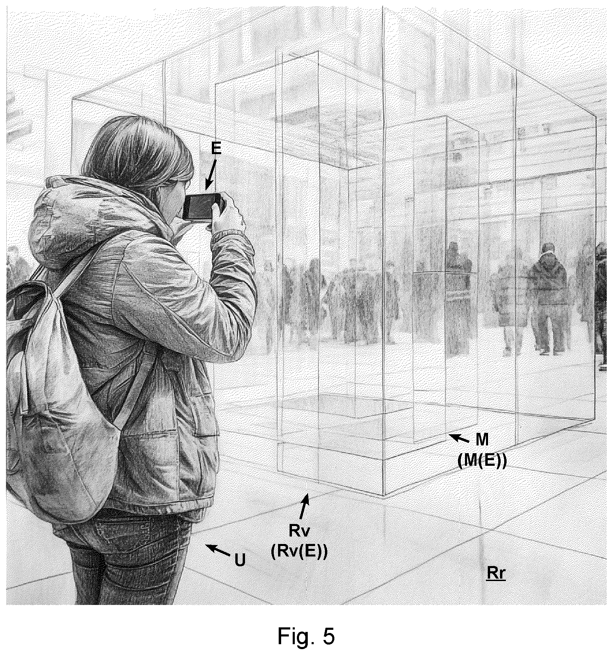

Fig. 5 zeigt den Anwendungsfall einer erfindungsgemäßen Plattform für Tourismus- bzw. Touristikverwendungen, beispielsweise für Städte, zur Präsentation von virtuellen Sehenswürdigkeiten oder dergleichen.

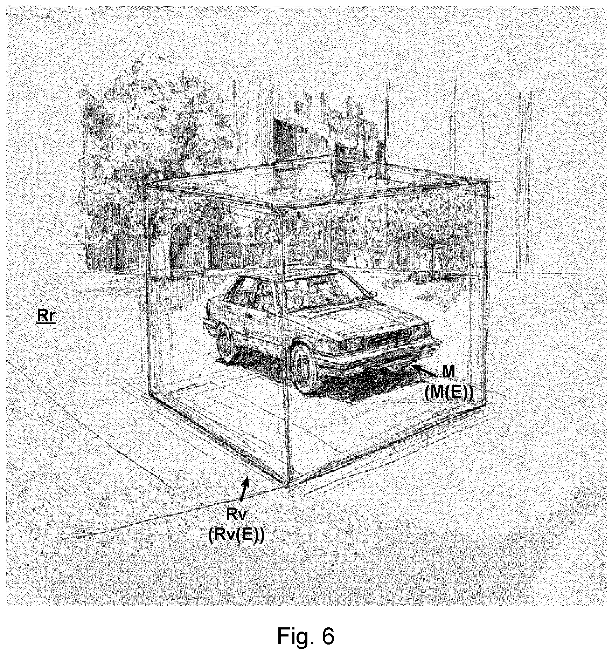

Fig. 6 zeigt den Anwendungsfall einer erfindungsgemäßen Plattform als sogenannter Showroom für virtuelle Inhalte, beispielsweise für Automobile. Ein erfindungsgemäßer Showroom ist vorteilhafterweise rund um die Uhr von Nutzer U der Plattform geöffnet bzw. zugänglich. Statt verschiedener physischer Modelle benötigt der Aussteller nur den Container C, der seitens eines Endgerätes eines Nutzers U einen erfindungsgemäßen virtuellen, dreidimensionalen Darstellungsraum Rv zur Aufnahme und/oder Wiedergaben von Medieninhalten M des Containers C bereitstellt. Weiteren ansonsten erforderliche Ressourcen wie Personal, Stellplätze, Wartung und/oder Werbematerialien können vorteilhafterweise entfallen.

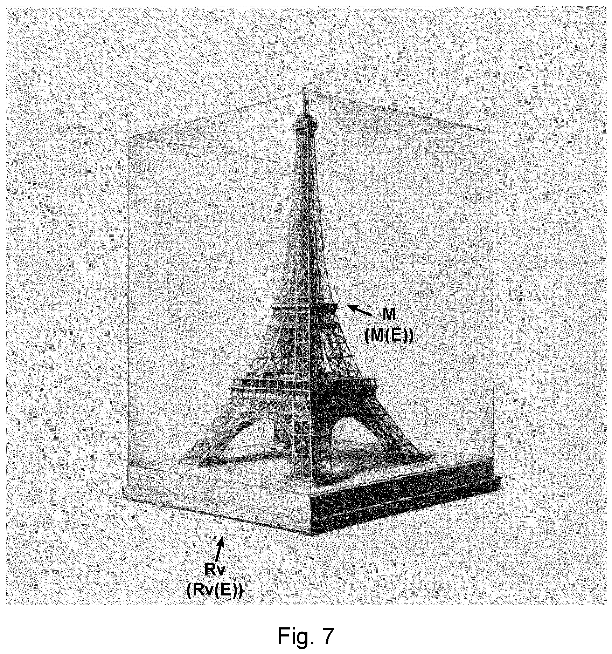

Fig. 7 zeigt ein Beispiel eines von einem Container C einer erfindungsgemäßen Plattform seitens eines Endgerätes E eines Nutzers U der Plattform bereitstellbaren virtuellen, dreidimensionalen Raums Rv mit Medieninhalt M, vorliegend eine Sehenswürdigkeit bzw. ein dreidimensionales Modell derselben, insbesondere auch für Bildungs- und/oder Unterrichtszwecke.

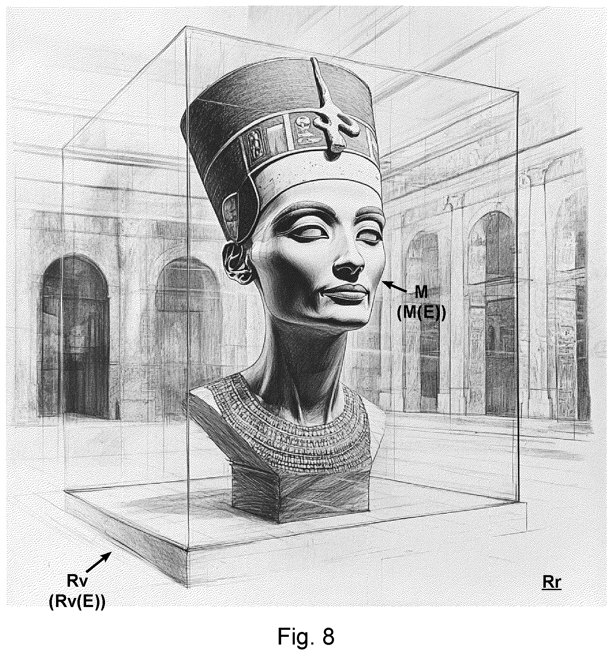

Fig. 8 zeigt den Anwendungsfall einer erfindungsgemäßen Plattform für Tourismus- bzw. Touristikverwendungen, beispielsweise für Städte, zur Präsentation von virtuellen Sehenswürdigkeiten oder dergleichen oder für Museen oder dergleichen Einrichtungen, insbesondere zur Präsentation von virtuellen Ausstellungstücken. Vorteilhafterweise können virtuelle Ausstellungstücke als Medieninhalt M mittels der Container C, welche jeweils einen georeferenzierten virtuellen, dreidimensionalen Darstellungsraum Rv seitens eines Endgerätes E eines Nutzers U zur Aufnahme und/oder Wiedergabe von Medieninhalten M bereitstellen, überall platziert und betrachtet werden, beispielsweise vor einem Museum bzw. Museumsgebäude, aber auch auf einem Schulhof, einem Marktplatz oder dergleichen Raum Rr in der realen, physischen Welt. Vorteilhafterweise können so beispielsweise auch sogenannte Dauerausstellungen mit wechselnden Inhalten realisiert werden, ohne Aufwand und Kosten mit Logistik, Personal und/oder dergleichen erbringen zu müssen.

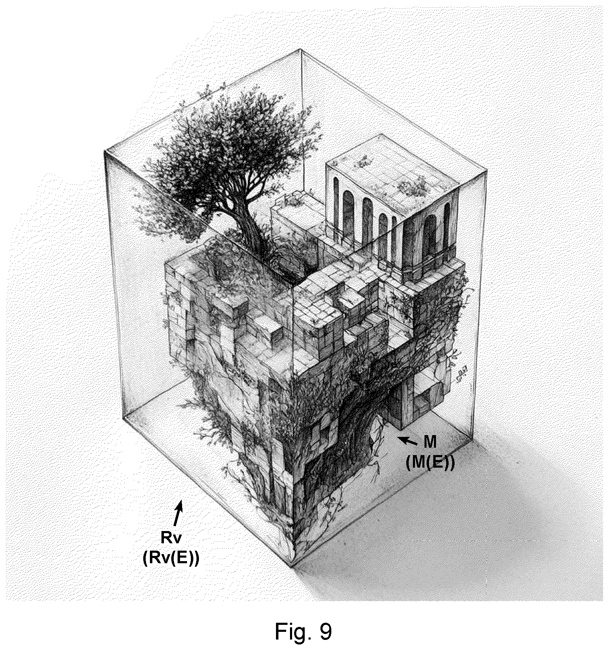

Fig. 9 zeigt ein Beispiel eines von einem Container C einer erfindungsgemäßen Plattform bereitstellbaren virtuellen, dreidimensionalen Raums Rv mit Medieninhalt M, vorliegend für Museen, Schulen oder dergleichen Einrichtungen, insbesondere zur Präsentation von virtuellen Ausstellungstücken oder Modellen oder Kunst.

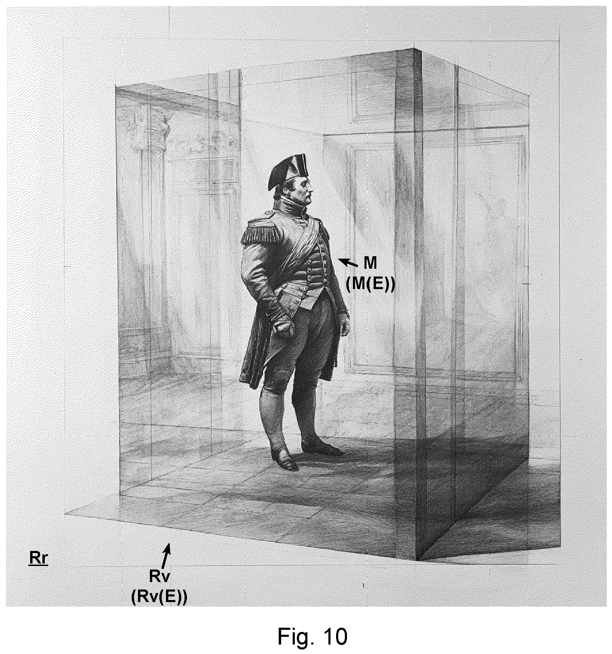

Fig. 10 zeigt den Anwendungsfall einer erfindungsgemäßen Plattform für historische Städteführer, insbesondere mittels Avataren historischer Persönlichkeiten oder dergleichen, vorzugsweise mit künstlicher Intelligenz (KI) generierte und/oder betriebene Avatar-Guides, insbesondere in der Nähe von Sehenswürdigkeiten, mittels der Container C und deren in einem georeferenzierten virtuellen, dreidimensionalen Darstellungsraum Rv seitens eines Endgerätes E eines Nutzers der Plattform wiedergebbaren Medieninhalten M.

Ein weiterer, hier nicht explizit dargestellter Anwendungsfall einer erfindungsgemäßen Plattform ist insbesondere im Zusammenhang mit gastronomischen Einrichtungen, beispielsweise Restaurants, gegeben. So können mittels der georeferenzierten Darstellungsräume Rv der Container C beispielsweise vor einem Restaurant virtuelle Modelle der Speisen, beispielsweise einer sogenannten Tageskarte, angereichert mit Informationen zu den Speisen, deren Zutaten und/oder dergleichen, als Medieninhalte M dargestellt werden.

Die beispielhaften Ausführungsbeispiele verdeutlichen die umfangeichen Möglichkeiten einer erfindungsgemäßen Plattform, insbesondere für Unternehmen, zur Präsentation von Produkten und/oder Dienstleistungen, unabhängig von Öffnungszeiten, Verfügbarkeit von Flächen bzw. Räumen und/oder Personal.

Die in den Figuren der Zeichnung dargestellten Ausführungsbeispiele und die im Zusammenhang mit diesen erläuterten Ausführungsbeispiele dienen lediglich einer Erläuterung der Erfindung und sind für die nicht beschränkend.

### Bezugszeichenliste:

- C: Container/Medien-Container, Containerformat, Containerdatei
- E: Endgerät (Nutzer (U)), Smartphone, Tablet, XR-Brille (Nutzer (U))
- M: Inhalt/Informationsinhalt/Medieninhalt (Container (C))
- M(E): Inhalt/Informationsinhalt/Medieninhalt eines Containers (C) in der Darstellung bzw. Wiedergabe seitens eines Endgerätes (E) eines Nutzers (U)
- M1: Inhalt/Informationsinhalt/Medieninhalt eines Containers (C)
- M2: Inhalt/Informationsinhalt/Medieninhalt eines Containers (C)
- M3: Inhalt/Informationsinhalt/Medieninhalt eines Containers (C)
- M4: Inhalt/Informationsinhalt/Medieninhalt eines Containers (C)
- M5: Inhalt/Informationsinhalt/Medieninhalt eines Containers (C)
- Rr: Raum in der realen, physischen Welt
- Rr(E): Raum in der realen, physischen Welt in der Darstellung bzw. Wiedergabe seitens eines Endgerätes (E) eines Nutzers (U)
- Rv: virtueller, dreidimensionaler Darstellungsraum (Container (C))
- Rv(E): virtueller, dreidimensionaler Darstellungsraum (Rv) in der Darstellung bzw. Wiedergabe seitens eines Endgerätes (E) eines Nutzers (U)
- U: Nutzer/Benutzer/User
- S: Symbol/Auswahlsymbol für Container (C)
- S(E): Symbol/Auswahlsymbol für Container (C) in der Darstellung bzw. Wiedergabe seitens eines Endgerätes (E) eines Nutzers (U)

## Patentansprüche

1. System bzw. Plattform, insbesondere Soziale Medien Plattform (Social Media Platform),
zum wechselseitigen Austausch von Informationen, insbesondere Medieninhalten (M), zwischen Nutzern (U) des Systems bzw. der Plattform über ein Kommunikationsnetzwerk, insbesondere Internet,
insbesondere zum Erstellen, Veröffentlichen, Kommentieren, Annotieren, Weiterleiten und/oder Abonnieren von Informationen, insbesondere Medieninhalten (M), mittels wenigstens eines vom jeweiligen Nutzer (U) dazu eingesetzten Endgerätes (E), insbesondere Smartphone, Tablet, einer sogenannten XR-Brille (XR: Extended Reality) und/oder dergleichen Endgerät (E),
wobei
die Informationen, insbesondere Medieninhalte (M), zumindest teilweise den Nutzern (U) eine computergestützte Erweiterung der Realitätswahrnehmung mittels wenigstens einem Endgerät (E) ermöglichen, insbesondere eine virtuelle Realität (Virtual Reality (VR)) und/oder eine erweiterte Realität (Augmented Reality (AR)) durch Darstellung von virtuellen, vorzugsweise dreidimensionalen Medieninhalten (M), besonders bevorzugt in Echtzeit, seitens des wenigstens einen Endgerätes (E),
wobei
Container (C), insbesondere Medien-Container (C), für seitens wenigstens eines Endgerätes (E) wiedergebbare Informationen, insbesondere Medieninhalte (M), vorgesehen sind,
die von wenigstens einem Nutzer (U) mit wenigstens einem Endgerät (E) zum Erstellen, Veröffentlichen, Kommentieren, Annotieren, Weiterleiten und/oder Abonnieren von Informationen, insbesondere Medieninhalten (M), nutzbar sind bzw. genutzt werden,
wobei
die seitens wenigstens eines Endgerätes (E) wiedergebbaren Informationen, insbesondere Medieninhalte (M), eines Containers (C), insbesondere Medien-Containers (C), seitens des Endgerätes (E) wenigstens eines Nutzers (U) in einem vom Container (C), insbesondere Medien-Container (C), bereitgestellten virtuellen, dreidimensionalem Darstellungsraum (Rv) wiedergebbar sind bzw. wiedergegeben werden, und
der virtuelle, dreidimensionale Darstellungsraum (Rv) mittels georeferenzierten Daten (Geodaten), vorzugsweise mittels raumbezogener Anker, einem Raum (Rr) in der realen, physischen Welt zuordbar ist bzw. zugeordnet ist.

2. System bzw. Plattform nach Anspruch 1, wobei die Zuordnung eindeutig, vorzugsweise eineindeutig, ist, insbesondere derart, dass ein virtueller, dreidimensionaler Darstellungsraum (Rv) genau einem entsprechenden georeferenziertem Raum (Rr) in der realen, physischen Welt zuordbar ist bzw. zugeordnet ist, bzw. umgekehrt einem georeferenziertem Raum (Rr) in der realen, physischen Welt genau ein virtueller, dreidimensionaler Darstellungsraum (Rv) zuordbar ist bzw. zugeordnet ist.

3. System bzw. Plattform nach Anspruch 1 oder Anspruch 2, wobei die seitens wenigstens eines Endgerätes (E) wiedergebbaren Informationen, insbesondere Medieninhalte (M), eines Containers (C), insbesondere Medien-Containers (C), seitens des Endgerätes (E) eines Nutzers (U) in dem virtuellen, dreidimensionalem Darstellungsraum (Rv) wiedergebbar sind bzw. wiedergegeben werden, wenn der Nutzer (U) mit seinem Endgerät (E)
- sich an oder in dem Raum (Rr) in der realen, physischen Welt befindet,
- sich mit einem vorzugsweise vorgebbaren und/oder einstellbaren Abstand, insbesondere Mindestabstand, zu dem Raum (Rr) in der realen, physischen Welt befindet,
und/oder
- den Raum (Rr) in der realen, physischen Welt mittels bzw. über eine virtuelle Darstellung der physischen Welt, insbesondere eine digitale Karte räumlicher Daten, in der raumbezogene Gegenstände, Fahrzeuge, Personen, Sachverhalte und/oder Prozesse maßstäblich generalisiert und graphisch in ihren Raumbeziehungen, vorzugsweise in Echtzeit, darstellbar sind bzw. dargestellt sind, auswählt bzw. anwählt.

4. System bzw. Plattform nach einem der Ansprüche 1 bis 3, wobei die seitens wenigstens eines Endgerätes (E) in einem virtuellen, dreidimensionalem Darstellungsraum (Rv) eines Containers (C), insbesondere Medien-Containers (C), wiedergebbaren Informationen, insbesondere Medieninhalte (M), zumindest teilweise von einem Container (C) auf wenigstens einen anderen Container (C) übertragbar sind bzw. übertragen werden, insbesondere in wenigstens einen anderen Container (C) kopierbar sind bzw. kopiert werden,
vorzugsweise wenn der Nutzer (U) mit seinem Endgerät (E)
- sich an oder in dem Raum (Rr) in der realen, physischen Welt befindet,
- sich mit einem vorzugsweise vorgebbaren und/oder einstellbaren Abstand, insbesondere Mindestabstand, zu dem Raum (Rr) in der realen, physischen Welt befindet,
und/oder
- den Raum (Rr) in der realen, physischen Welt mittels bzw. über eine virtuelle Darstellung der physischen Welt, insbesondere eine digitale Karte räumlicher Daten, in der raumbezogene Gegenstände, Fahrzeuge, Personen, Sachverhalte und/oder Prozesse maßstäblich generalisiert und graphisch in ihren Raumbeziehungen, vorzugsweise in Echtzeit, darstellbar sind bzw. dargestellt sind, auswählt bzw. anwählt.

5. System bzw. Plattform nach einem der Ansprüche 1 bis 4, wobei der virtuelle, dreidimensionale Darstellungsraum (Rv) eines Containers (C), insbesondere Medien-Containers (C), zur Wiedergabe von Informationen, insbesondere Medieninhalten (M) seitens wenigstens eines Endgerätes (E) eine auswählbare Form und vorzugsweise vorgebbare bzw. einstellbare Dimensionen bzw. Abmessungen in Bezug auf einen Raum (Rr) in der realen physischen Welt aufweist, und seitens des wenigstens einen Endgerätes (E) wenigstens eines Nutzers (U) mit den entsprechenden Dimensionen bzw. Abmessungen der realen physischen Welt darstellbar ist bzw. dargestellt wird.

6. System bzw. Plattform nach einem der Ansprüche 1 bis 5, wobei die Dimensionen bzw. Abmessungen eines virtuellen, dreidimensionalen Darstellungsraums (Rv) eines Containers (C), insbesondere Medien-Containers (C), veränderbar, insbesondere skalierbar sind.

7. System bzw. Plattform nach einem der Ansprüche 1 bis 6, wobei die virtuellen, dreidimensionalen Darstellungsräume (Rv) von Containern (C), insbesondere Medien-Containern (C), voneinander mit einem vorzugsweise vorgebbaren bzw. einstellbaren Abstand der realen, physischen Welt zuordbar bzw. zugeordnet sind.

8. System bzw. Plattform nach einem der Ansprüche 1 bis 7, wobei die virtuellen, dreidimensionalen Darstellungsräume (Rv) von wenigstens zwei Containern (C), insbesondere Medien-Containern (C), miteinander kombinierbar sind.

9. System bzw. Plattform nach einem der Ansprüche 1 bis 8, wobei ein virtueller, dreidimensionaler Darstellungsraum (Rv) eines Containers (C), insbesondere Medien-Containers (C), hinsichtlich seiner Lage und/oder Ausrichtung, insbesondere bezogen auf seine Zuordnung in der realen physischen Welt, veränderbar ist, vorzugsweise rotierbar bzw. verschwenkbar ist, insbesondere mittels georeferenzierter Daten (Geodaten), vorzugsweise mittels raumbezogener Anker.

10. System bzw. Plattform nach einem der Ansprüche 1 bis 9, wobei wenigstens ein virtueller, dreidimensionaler Darstellungsraum (Rv) eines Containers (C), insbesondere Medien-Containers (C), mittels einer Blockkette (Blockchain) abgesichert ist, vorzugsweise im Hinblick auf ein Erstellen, Veröffentlichen, Kommentieren, Annotieren, Weiterleiten und/oder Abonnieren von Informationen, insbesondere Medieninhalten (M), des Containers (C), im Hinblick auf eine Veräußerung oder Vermietung des Containers (C) und/oder im Hinblick auf eine Veränderung des virtuellen, dreidimensionalen Darstellungsraums (Rv) und/oder der in diesem wiedergebaren bzw. wiederzugebenden Informationen, insbesondere Medieninhalte (M).

11. System bzw. Plattform nach einem der Ansprüche 1 bis 10, wobei diese eine Augmented Reality-Programmierschnittstelle aufweist, die vorzugsweise Mittel zur Erfassung der einen Nutzer (U) bzw. das von ihm dabei genutzte Endgerät (E) umgebenden physischen Welt, insbesondere in Echtzeit, umfasst, vorzugsweise umfassend
ein Ermitteln von Objekten, Größenverhältnissen, Anordnungsmustern und/oder Flächen in der umgebenden physischen Welt,
Mittel zur Bewegungsverfolgung (Tracking) von Objekten,
Mittel zur Analyse von Licht- und/oder Schattenquellen von Objekten,
und/oder
Mittel zur Anordnung bzw. Platzierung wenigstens eines virtuellen Objektes in dem virtuellen, dreidimensionalen Darstellungsraum (Rv) des Containers (C), insbesondere Mediencontainers (C).

12. System bzw. Plattform nach einem der Ansprüche 1 bis 11, wobei als Medieninhalte (M) vorgesehen sind: Text, Audio, Bild, Foto, und/oder Video, insbesondere sogenannte Videos im Kurzformat, Animation, dreidimensionale Animation (3D-Animation) und/oder dreidimensionales Modell (3D-Modell).

13. System bzw. Plattform nach einem der Ansprüche 1 bis 12, wobei der virtuelle, dreidimensionale Darstellungsraum (Rv) des Containers (C), insbesondere Medien-Containers (C), ein Würfel ist, vorzugsweise mit den Abmessungen bzw. Dimensionen von Länge-Breite-Höhe mit 2 Meter mal 2 Meter mal 2 Meter bezogen auf die reale, physische Welt, wobei vorzugsweise der Mittelpunkt des Würfels den Ankerpunkt des raumbezogener Ankers in der realen, physischen Welt bildet, welcher besonders vorzugsweise ein bezogen auf die reale physische Welt zumindest hinsichtlich der Höhenlage nivellierter Terrainanker ist.

14. System bzw. Plattform nach einem der Ansprüche 1 bis 13, wobei der virtuelle, dreidimensionale Darstellungsraum (Rv) des Containers (C), insbesondere Medien-Containers (C), vorzugsweise für Informationen, insbesondere Medieninhalte (M), mit wenigstens einer weiteren Dimension versehbar ist bzw. versehen ist, welche vorzugsweise ein zeitlicher Parameter und/oder ein Entwicklungsparameter ist.

15. Verfahren zum wechselseitigen Austausch von Informationen, insbesondere Medieninhalten (M), zwischen Nutzern (U) eines System bzw. einer Plattform, insbesondere eines System bzw. einer Plattform nach einem der Ansprüche 1 bis 14, über ein Kommunikationsnetzwerk, insbesondere Internet,
insbesondere zum Erstellen, Veröffentlichen, Kommentieren, Annotieren, Weiterleiten und/oder Abonnieren von Informationen, insbesondere Medieninhalten (M), mittels wenigstens eines vom jeweiligen Nutzer (U) dazu eingesetzten Endgerätes (E), insbesondere Smartphone, Tablet, einer sogenannten XR-Brille (XR: Extended Reality) und/oder dergleichen Endgerät (E),
wobei
die Informationen, insbesondere Medieninhalte (M), zumindest teilweise den Nutzern (U) eine computergestützte Erweiterung der Realitätswahrnehmung mittels wenigstens einem Endgerät (E) ermöglichen, insbesondere eine virtuelle Realität (Virtual Reality (VR)) und/oder eine erweiterte Realität (Augmented Reality (AR)) durch Darstellung von virtuellen, vorzugsweise dreidimensionalen Medieninhalten (M), besonders bevorzugt in Echtzeit, seitens des wenigstens einen Endgerätes (E),
wobei
Container (C), insbesondere Medien-Container (C), für seitens wenigstens eines Endgerätes (E) wiedergebbare Informationen, insbesondere Medieninhalte (M), vorgesehen sind,
die von wenigstens einem Nutzer (U) mit wenigstens einem Endgerät (E) zum Erstellen, Veröffentlichen, Kommentieren, Annotieren, Weiterleiten und/oder Abonnieren von Informationen, insbesondere Medieninhalten, nutzbar sind oder genutzt werden,
wobei
die seitens wenigstens eines Endgerätes (E) wiedergebbaren Informationen, insbesondere Medieninhalte (M), eines Containers (C), insbesondere Medien-Containers (C), seitens des Endgerätes (E) wenigstens eines Nutzers (U) in einem vom Container (C), insbesondere Medien-Container (C), bereitgestellten virtuellen, dreidimensionalem Darstellungsraum (Rv) wiedergebbar sind bzw. wiedergegeben werden, und
der virtuelle, dreidimensionale Darstellungsraum (Rv) mittels georeferenzierten Daten (Geodaten), vorzugsweise mittels raumbezogener Anker, einem Raum (Rr) in der realen, physischen Welt zuordbar ist bzw. zugeordnet wird.

16. Schnittstelle zur Programmierung von Anwendungen (Anwendungsprogrammierschnittstelle (API: Application Programming Interface)) zur Anbindung an und/oder Integration in ein System bzw. eine Plattform, insbesondere eines System bzw. einer Plattform nach einem der Ansprüche 1 bis 14, zum wechselseitigen Austausch von Informationen, insbesondere Medieninhalten (M), zwischen Nutzern (U) des Systems bzw. der Plattform über ein Kommunikationsnetzwerk, insbesondere Internet,
insbesondere zum Erstellen, Veröffentlichen, Kommentieren, Annotieren, Weiterleiten und/oder Abonnieren von Informationen, insbesondere Medieninhalten (M), mittels wenigstens eines vom jeweiligen Nutzer (U) dazu eingesetzten Endgerätes (E), insbesondere Smartphone, Tablet, einer sogenannten XR-Brille (XR: Extended Reality) und/oder dergleichen Endgerät (E),
wobei
die Informationen, insbesondere Medieninhalte (M), zumindest teilweise den Nutzern (U) eine computergestützte Erweiterung der Realitätswahrnehmung mittels wenigstens einem Endgerät (E) ermöglichen, insbesondere eine virtuelle Realität (Virtual Reality (VR)) und/oder eine erweiterte Realität (Augmented Reality (AR)) durch Darstellung von virtuellen, vorzugsweise dreidimensionalen Medieninhalten (M), besonders bevorzugt in Echtzeit, seitens des wenigstens einen Endgerätes (E),
wobei
Container (C), insbesondere Medien-Container (C), für seitens wenigstens eines Endgerätes (E) wiedergebbare Informationen, insbesondere Medieninhalte (M), vorgesehen sind,
die von wenigstens einem Nutzer (U) mit wenigstens einem Endgerät (E) zum Erstellen, Veröffentlichen, Kommentieren, Annotieren, Weiterleiten und/oder Abonnieren von Informationen, insbesondere Medieninhalten (M), nutzbar sind bzw. genutzt werden,
wobei
die seitens wenigstens eines Endgerätes (E) wiedergebbaren Informationen, insbesondere Medieninhalte (M), eines Containers (C), insbesondere Medien-Containers (C), seitens des Endgerätes (E) wenigstens eines Nutzers (U) in einem vom Container (C), insbesondere Medien-Container (C), bereitgestellten virtuellen, dreidimensionalem Darstellungsraum (Rv) wiedergebbar sind bzw. wiedergegeben werden, und
der virtuelle, dreidimensionale Darstellungsraum (Rv) mittels georeferenzierten Daten (Geodaten), vorzugsweise mittels raumbezogener Anker, einem Raum (Rr) in der realen, physischen Welt zuordbar ist bzw. zugeordnet ist.
